(19) Europäisches Patentamt / European Patent Office / Office européen des brevets

(11) **EP 4 481 464 A1**

(12) **EUROPEAN PATENT APPLICATION**
published in accordance with Art. 153(4) EPC

(43) Date of publication:
**25.12.2024 Bulletin 2024/52**

(21) Application number: **22927001.2**

(22) Date of filing: **15.02.2022**

(51) International Patent Classification (IPC):
**G02B 21/36** (2006.01)

(52) Cooperative Patent Classification (CPC):
**G02B 21/36**

(86) International application number:
**PCT/JP2022/006016**

(87) International publication number:
**WO 2023/157098 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIKON CORPORATION**
**Minato-ku**
**Tokyo 108-6290 (JP)**

(72) Inventors:
• **TERUI, Yuki**
  **Tokyo 108-6290 (JP)**
• **FUJIKAKE, Yosuke**
  **Tokyo 108-6290 (JP)**

(74) Representative: **Hoffmann Eitle**
**Patent- und Rechtsanwälte PartmbB**
**Arabellastraße 30**
**81925 München (DE)**

(54) **MICROSCOPE, IMAGE PROCESSING DEVICE, IMAGE PROCESSING METHOD, AND IMAGE PROCESSING PROGRAM**

(57) To improve the resolution and the sectioning thickness in the optical axis direction of an optical system of a microscope in a simpler manner. A first three-dimensional point spread function based on the optical system in a first state is different from a second three-dimensional point spread function based on the optical system in a second state. Included are a generator that generates an image group including a first image of a first focal plane acquired through the optical system in the first state and a second image of a second focal plane acquired through the optical system in the second state, and an estimator that estimates respective structures of a plurality of planes including a first estimated sample plane, on the basis of the image group, and the first three-dimensional point spread function and the second three-dimensional point spread function, and outputs an estimated image. The estimator i) outputs, as the estimated image, an image obtained by weighting and integrating the respective estimated structures of the planes. The estimator ii) outputs, as the estimated image, an image obtained by weighting the first three-dimensional point spread function and the second three-dimensional point spread function differently in the optical axis direction, then estimating the structures, and integrating the estimated structures in a state of weighting of 1.

FIG.1

## Description

Technical Field

The present invention relates to a microscope, an image processing device, an image processing method, and an image processing program.

Background Art

A technique for generating an image of a sample on the basis of signal light from the sample when the sample is irradiated with illumination light by an optical system is described, for example, in the following Non Patent Literature 1. The technique described in Non Patent Literature 1 estimates a three-dimensional structure of a sample on the basis of a two-dimensional image of the sample and a three-dimensional point spread function of an optical system. In the technique described in Non Patent Literature 1, it is necessary to use a special phase plate in order to estimate a wide range of three-dimensional structures in the optical axis direction of the optical system (this direction is hereinafter referred to as a Z direction as appropriate). It is therefore desired to improve the resolution and the sectioning thickness in the optical axis direction of the optical system of a microscope in a simpler manner.

Citation List

Non Patent Literature

[Non Patent Literature 1] C. Roider et al, Deconvolution approach for 3D scanning microscopy with helical phase engineering, Biomedical Optics Express, 24, 14, 15456 (2016)

Summary of Invention

Solution to Problem

According to a first aspect of the present invention, a microscope is provided which includes: an optical system to irradiate a sample with illumination light and guide signal light from the sample to a detector; and an image processing device to generate an image of the sample on the basis of a signal from the detector and process the image, in which a first three-dimensional point spread function based on the optical system in a first state is different from a second three-dimensional point spread function based on the optical system in a second state different from the first state. The image processing device includes a generator that generates an image group including a first image of a first focal plane based on the signal acquired through the optical system in the first state and a second image of a second focal plane based on the signal acquired through the optical system in the second state, the second focal plane substantially matching the first focal plane in an optical axis direction of the optical system, the image group being based on the signal acquired without changing a relative positional relationship in the optical axis direction between the sample and an irradiation position of the illumination light, and an estimator that estimates respective structures of a plurality of planes including a first estimated sample plane in the sample, along the optical axis direction, on the basis of the image group, and the first three-dimensional point spread function and the second three-dimensional point spread function, and outputs an estimated image based on the estimated structures, in which the estimator incorporates at least one of the following:

> i) outputting, as the estimated image, an image obtained by weighting and integrating the respective estimated structures of the planes; or
> ii) outputting, as the estimated image, an image obtained by weighting the first three-dimensional point spread function and the second three-dimensional point spread function differently in the optical axis direction, then estimating the structures, and integrating the estimated structures in a state of weighting of 1.

According to a second aspect of the present invention, a microscope is provided which includes: an optical system to irradiate a sample with illumination light and guide signal light from the sample to a detector; and an image processing device to generate an image of the sample on the basis of a signal from the detector and process the image, in which a first three-dimensional amplitude spread function based on the optical system in a first state is different from a second three-dimensional amplitude spread function based on the optical system in a second state different from the first state. The image processing device includes a generator that generates an image group including a first image of a first focal plane based on the signal acquired through the optical system in the first state and a second image of a second focal plane based on the signal acquired through the optical system in the second state, the second focal plane substantially matching the first focal plane in an optical axis direction of the optical system, the image group being based on the signal acquired without changing a relative positional relationship in the optical axis direction between the sample and an irradiation position of the illumination light, and an estimator that estimates respective structures of a plurality of planes including a first estimated sample plane in the sample, along the optical axis direction, on the basis of the image group, and the first three-dimensional amplitude spread function and the second three-dimensional amplitude spread function, and outputs an estimated image based on the estimated structures, in which the estimator incorporates at least one of the following:

> i) outputting, as the estimated image, an image obtained by weighting and integrating the respective estimated structures of the planes; or
> ii) outputting, as the estimated image, an image obtained by weighting the first three-dimensional amplitude spread function and the second three-dimensional amplitude spread function differently in the optical axis direction, then estimating the structures, and integrating the estimated structures in a state of weighting of 1.

According to a third aspect of the present invention, an image processing device is provided which generates an image of a sample on the basis of a detection signal in a detector of signal light from the sample when the sample is irradiated with illumination light by an optical system, and processes the image. The image processing device includes, when a first three-dimensional point spread function based on the optical system in a first state is different from a second three-dimensional point spread function based on the optical system in a second state different from the first state: a generator that generates an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and an estimator that estimates respective structures of a plurality of planes including a first estimated sample plane in the sample, along the optical axis direction, on the basis of the image group, and the first three-dimensional point spread function and the second three-dimensional point spread function, and outputs an estimated image based on the estimated structures, in which the estimator incorporates at least one of the following:

> i) outputting, as the estimated image, an image obtained by weighting and integrating the respective estimated structures of the planes; or
> ii) outputting, as the estimated image, an image obtained by weighting the first three-dimensional point spread function and the second three-dimensional point spread function differently in the optical axis direction, then estimating the structures, and integrating the estimated structures in a state of weighting of 1.

According to a fourth aspect of the present invention, an image processing method is provided to generate an image of a sample on the basis of a detection signal in a detector of signal light from the sample when the sample is irradiated with illumination light by an optical system, and process the image. The image processing method includes, when a first three-dimensional point spread function based on the optical system in a first state is different from a second three-dimensional point spread function based on the optical system in a second state different from the first state: generating an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and estimating respective structures of a plurality of planes including a first estimated sample plane in the sample, along the optical axis direction, on the basis of the image group, and the first three-dimensional point spread function and the second three-dimensional point spread function, and outputting an estimated image based on the estimated structures, in which the outputting the estimated image includes at least one of the following:

> i) outputting, as the estimated image, an image obtained by weighting and integrating the respective estimated structures of the planes; or
> ii) outputting, as the estimated image, an image obtained by weighting the first three-dimensional point spread function and the second three-dimensional point spread function differently in the optical axis direction, then estimating the structures, and integrating the estimated structures in a state of weighting of 1.

According to a fifth aspect of the present invention, an image processing program is provided to generate an image of a sample on the basis of a detection signal in a detector of signal light from the sample when the sample is irradiated with illumination light by an optical system, and process the image. The image processing program causes a computer to perform processing including, when a first three-dimensional point spread function based on the optical system in a first state is different from a second three-dimensional point spread function based on the optical system in a second state different from the first state: generating an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and estimating respective structures of a plurality of planes including a first estimated sample plane in the sample, along the optical axis direction, on the basis of the image group, and the first three-dimensional point spread function and the second three-dimensional point spread function, and outputting an estimated image based on the estimated structures, in which the outputting the estimated image includes at least one of the following:

i) outputting, as the estimated image, an image obtained by weighting and integrating the respective estimated structures of the planes; or

ii) outputting, as the estimated image, an image obtained by weighting the first three-dimensional point spread function and the second three-dimensional point spread function differently in the optical axis direction, then estimating the structures, and integrating the estimated structures in a state of weighting of 1.

Brief Description of the Drawings

Fig. 1 is a schematic diagram illustrating an example configuration of a microscope according to a first embodiment.
Fig. 2 is a diagram illustrating an example in which an intensity profile in the Z direction of a three-dimensional point spread function differs between an optical system in a first state and an optical system in a second state according to the first embodiment.
Fig. 3 is a diagram schematically illustrating the relation between a focal plane, a sample plane, a first plane, a second plane, and an estimated sample plane according to the first embodiment.
Fig. 4 is a diagram illustrating an example of a plurality of images generated by a generator in the first embodiment.
Fig. 5 is a diagram illustrating an example of a two-dimensional point spread function in the first plane and a two-dimensional point spread function in the second plane in the optical system in the first state and the optical system in the second state in the first embodiment.
Fig. 6 is a flowchart illustrating the flow of an image processing method according to the first embodiment.
Fig. 7 is a diagram illustrating an example of an estimated image based on a structure estimated by an estimator in the first embodiment.
Fig. 8 is a schematic diagram illustrating an example configuration of a microscope according to a second embodiment.
Fig. 9 is a diagram schematically illustrating the relation between a focal plane, a sample plane, a first plane, a second plane, and an estimated sample plane according to the second embodiment.
Fig. 10 is a schematic diagram illustrating an example configuration of a microscope according to a third embodiment.
Fig. 11 is a diagram illustrating a configuration of a detector according to the third embodiment.
Fig. 12 is a diagram schematically illustrating the relation between a focal plane, a sample plane, a first plane, a second plane, and an estimated sample plane according to the third embodiment.
Fig. 13 is a schematic diagram illustrating an example configuration of a microscope according to a fourth embodiment.
Fig. 14 is a diagram illustrating an approximate shape of the XZ cross section of a three-dimensional point spread function in the first state and an approximate shape of the XZ cross section of a three-dimensional point spread function in the second state according to the fourth embodiment.
Fig. 15 is a diagram illustrating an example of a two-dimensional point spread function in the first plane and a two-dimensional point spread function in the second plane in the optical system in the first state and the optical system in the second state in the fourth embodiment.
Fig. 16 is a schematic diagram illustrating an example configuration of a microscope according to a fifth embodiment.
Fig. 17 is a diagram illustrating an example of a two-dimensional point spread function in the first plane and a two-dimensional point spread function in the second plane in the optical system in the first state and the optical system in the second state in the fifth embodiment.
Fig. 18 is a schematic diagram illustrating an example configuration of a microscope according to a sixth embodiment.
Fig. 19 is a diagram illustrating an example of a two-dimensional point spread function in the first plane and a two-dimensional point spread function in the second plane in the optical system in the first state and the optical system in the second state in the sixth embodiment.
Fig. 20 is a schematic diagram illustrating an example configuration of a microscope according to a seventh embodiment.

Fig. 21 is a diagram illustrating an example of a two-dimensional point spread function in the first plane and a two-dimensional point spread function in the second plane in the optical system in the first state and the optical system in the second state in the seventh embodiment.

Fig. 22 is a schematic diagram illustrating an example configuration of a microscope according to an eighth embodiment.

Fig. 23 is a schematic diagram illustrating an example configuration of a microscope according to a ninth embodiment.

Fig. 24 is a diagram illustrating an example of a two-dimensional point spread function in the first plane and a two-dimensional point spread function in the second plane in the optical system in the first state and the optical system in the second state in the ninth embodiment.

Fig. 25 is a schematic diagram illustrating an example configuration of a microscope according to a tenth embodiment.

Fig. 26 is a diagram illustrating an example of a two-dimensional point spread function in the first plane and a two-dimensional point spread function in the second plane in the optical system in the first state and the optical system in the second state in the tenth embodiment.

Fig. 27 is a schematic diagram illustrating an example configuration of a microscope according to an eleventh embodiment.

Fig. 28 is a diagram illustrating an example of a two-dimensional amplitude spread function in the first plane and a two-dimensional amplitude spread function in the second plane in the optical system in the first state and the optical system in the second state according to the eleventh embodiment.

Fig. 29 is a schematic diagram illustrating an example configuration of a microscope according to a twelfth embodiment.

Fig. 30 is a diagram illustrating an example of a plurality of images generated by a generator in the twelfth embodiment.

Fig. 31 is a diagram illustrating an example of an estimated image based on a structure estimated by an estimator in the twelfth embodiment.

Description of Embodiments

Embodiments will be described below with reference to the drawings. In the drawings, some parts are illustrated with a different scale as appropriate, for example, in a larger size or an exaggerated manner to illustrate the embodiments. In the drawings, an XYZ coordinate system is used to illustrate the directions in the drawings. In this XYZ coordinate system, the direction along the optical system of the microscope is defined as a Z direction. A plane orthogonal to the Z direction is defined as an XY plane. One direction in the XY plane is denoted as an X direction, and the direction orthogonal to the X direction is denoted as a Y direction.

[First Embodiment]

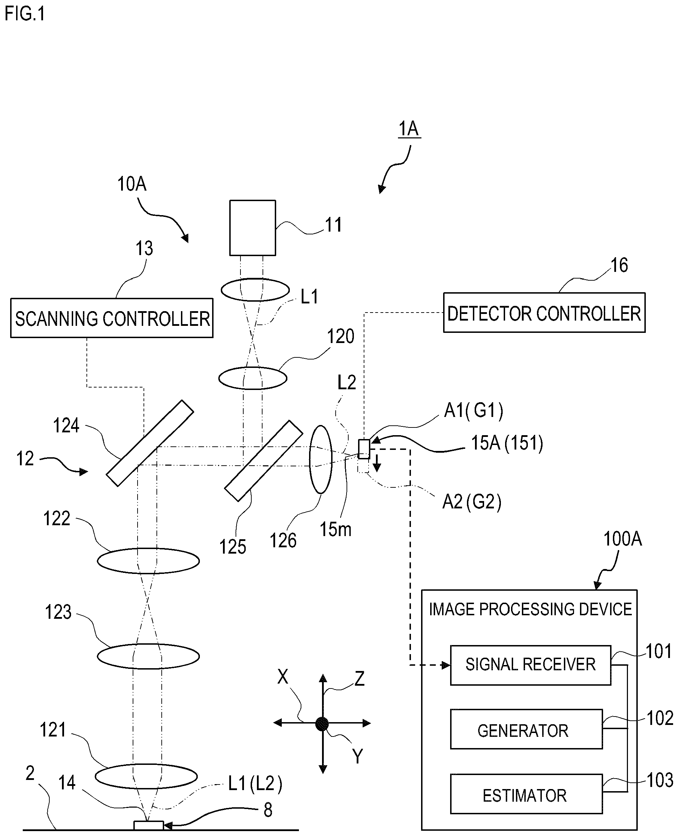

A first embodiment will be described. Fig. 1 is a schematic diagram illustrating an example configuration of a microscope according to the first embodiment. In the following first embodiment, a microscope 1A will be described as a confocal microscope. As illustrated in Fig. 1, the microscope 1A includes a microscope body 10A and an image processing device 100A. The microscope body 10A includes a light source 11, an optical system 12, a scanning controller 13, and a detector 15A.

Configuration of Microscope Body

The light source 11 emits illumination light L1 such as laser. The light source 11 may be a monochromatic (single wavelength) light source or a multicolor (multiple wavelengths) light source. The light source 11 can be either a laser that emits continuous wave light or a laser that emits pulsed light. The light source 11 is not necessarily a laser but may be an LED or a lamp. When a substance that emits fluorescence is used as a sample 8, a wavelength that excites a fluorescent substance contained in the sample 8 is suitably selected as the wavelength of the light source 11. When a substance that emits fluorescence is used as the sample 8, a wavelength that causes multiphoton excitation of a fluorescent substance contained in the sample 8 may be selected as the wavelength of the light source 11. The light source 11 may be provided in a replaceable manner (attachable or removable) in the microscope body 10A. The light source 11 may be attached externally to the microscope body 10A, for example, during observation with the microscope body 10A. In this case, for example, the illumination light L1 may be introduced into the microscope body 10A from the light source 11 external to the microscope body 10A through an existing optical member such as an optical fiber.

The optical system 12 irradiates the sample 8 with the illumination light L1 from the light source 11 and guides signal light L2 from the sample 8 to the detector 15A. The optical system 12 includes a collimator lens 120, an objective lens 121, a pupil projection lens 122, a lens 123, a deflector 124, an optical path separator 125, a condenser lens 126, and the like. The collimator lens 120 converts the illumination light L1 emitted from the light source 11, such as a laser, into substantially collimated light. The optical path separator 125 is configured with a dichroic mirror or the like. The optical path separator 125 introduces the illumination light L1 passing through the collimator lens 120 to the deflector 124.

The deflector 124 introduces the incident illumination light L1 to the objective lens 121 through the pupil projection lens 122 and the lens 123. The deflector 124 is provided with an X-direction deflection mirror and a Y-direction deflection mirror as an example, each of which is constituted with a galvanometer mirror, a MEMS mirror, or a resonant mirror (resonance-type mirror), for example. The deflector 124 is disposed so as to be substantially conjugate to the pupil position of the objective lens 121 with respect to the sample 8 through the objective lens 121, the lens 123, and the pupil projection lens 122.

The objective lens 121 irradiates the sample 8 held on a stage 2 with the incident illumination light L1. The objective lens 121 forms, on the sample 8, an illumination region 14 in which the illumination light L1 is gathered to a size about the resolution limit of the objective lens 121. If the light source 11 has a single wavelength, the illumination region 14 on the sample 8 is the illumination region 14 by light of a single wavelength. If the light source 11 includes multiple wavelengths, the illumination region 14 on the sample 8 is the illumination region 14 including multiple wavelengths. As the deflector 124 swings in a predetermined direction, the illumination region 14 moves in a plane orthogonal to the optical axis direction of the illumination light L1.

The scanning controller 13 controls the swing of the X-direction deflection mirror and the Y-direction deflection mirror of the deflector 124 in a predetermined direction to scan the illumination region 14 along a plane orthogonal to the optical axis direction of the illumination light L1 on the sample 8. The scanning controller 13 may be configured to scan the illumination region 14 and the sample 8 on the stage 2 relative to each other by moving the stage 2 holding the sample 8 along a plane orthogonal to the optical axis direction of the illumination light L1. Both of the scanning by the deflector 124 and the scanning by the stage 2 may be performed.

The light (signal light) L2 emitted from the sample 8 by irradiation of the illumination region 14 enters the objective lens 121. The signal light L2 is refracted by the objective lens 121 and passes through the lens 123 and the pupil projection lens 122 to reach the deflector 124. The signal light L2 is reflected by the deflector 124 and thereby returned (de-scanned) to substantially the same optical path as that of the illumination light L1 to reach the optical path separator 125. The signal light L2 passes through the optical path separator 125 and the condenser lens 126 and enters the detector 15A.

The optical system that guides the illumination light L1 emitted from the light source 11 to the sample 8 is an illumination optical system. In other words, each of the optical members (the optical path separator 125, the deflector 124, the pupil projection lens 122, the lens 123, the objective lens 121, and the like) disposed on the optical path from the optical path separator 125 to the sample 8 constitutes an illumination optical system. The optical system that guides the light emitted from the sample 8 to the detector 15A is a detection optical system. In other words, each of the optical members (the objective lens 121, the pupil projection lens 122, the lens 123, the deflector 124, the optical path separator 125, the condenser lens 126, and the like) disposed on the optical path from the sample 8 to the detector 15A constitutes a detection optical system.

The detector 15A is disposed at a position conjugate to the illumination region 14 on the sample 8 through the detection optical system, that is, a position having an imaging relation with the illumination region 14 on the sample 8 through the detection optical system. On a light-receiving surface of the detector 15A, an image 15m of fluorescence of the sample 8 excited by the illumination region 14 is formed as an image of the illumination region 14. Even when the deflector 124 is driven to scan the illumination region 14 and the sample 8 relative to each other, the image 15m on the light-receiving surface of the detector 15A remains stationary regardless of the state of the deflector 124. This is because the image 15m is deflected (de-scanned) in the opposite direction of the illumination light L1 when the signal light L2 passes through the deflector 124.

Configuration of Detector

The detector 15A detects the image 15m formed on the light-receiving surface of the detector 15A. In the present embodiment, the detector 15A is a point detector 151 whose light-receiving surface is sufficiently smaller than the image 15m of fluorescence of the sample 8. The point detector 151 includes a photoelectric converter (not illustrated) composed of a semiconductor or the like. The photoelectric converter (not illustrated) of the detector 15A outputs a signal (electrical signal) corresponding to the quantity of detected light to the image processing device 100A. In the present embodiment, the detector 15A can be moved by a detector controller 16 between a plurality of positions in a plane orthogonal to the optical axis direction of the signal light L2. When attention is given to two of these positions, the detector 15A can be moved between any given first position G1 and second position G2 in a plane orthogonal to the optical axis direction of the signal light L2. The movement of the detector 15A is controlled by the detector controller 16 in a plane orthogonal to the optical axis direction of the signal light L2. The detector 15A moves in a plane orthogonal to the optical axis direction to detect the quantity of light of the image 15m at each of the positions in the plane orthogonal to the optical axis direction.

Three-Dimensional Point Spread Function of Optical System

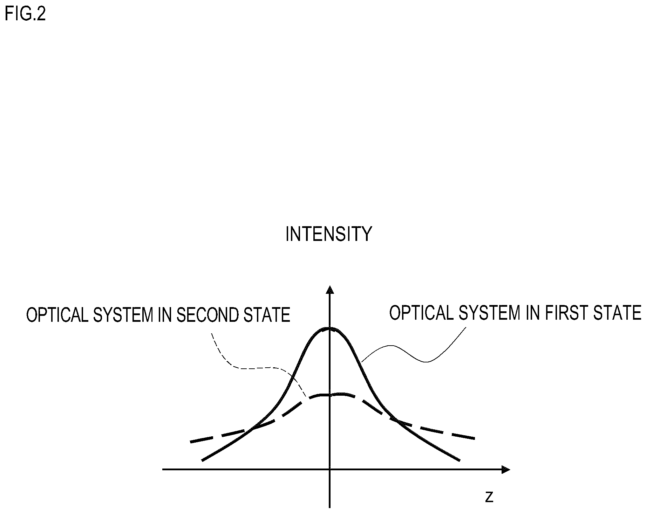

Fig. 2 is a diagram illustrating an example in which an intensity profile in the Z direction of a three-dimensional point spread function differs between the optical system in a first state and the optical system in a second state according to the embodiment.

When the detector 15A changes its position in the plane orthogonal to the optical axis direction, its relative position to the light source 11 changes. When the relative position of the detector 15A to the light source 11 changes, a three-dimensional point spread function (3D-PSF) through the optical system 12 changes. In other words, as illustrated in Fig. 2, the three-dimensional point spread function through the optical system 12 differs between a first state A1 in which the detector 15A is located at any first position G1 and a second state A2 in which the detector 15A is located at any second position G2 different from the first position G1 in a plane orthogonal to the optical axis direction. Here, the three-dimensional point spread function is a function that quantitatively represents the intensity distribution of the signal light L2 emitted from a point object present in the sample 8 and detected by the detector 15A. The optical system in the first state and the optical system in the second state are each determined by the relative relationship between the light source 11, the optical system 12, and the detector 15A. The optical system in the first state and the optical system in the second state therefore include the light source 11, the optical system 12, and the detector 15A. This is applicable when the configuration of the optical system 12 and the detector are different as in other embodiments.

The image processing device 100A generates an image of the sample 8 on the basis of a signal from the detector 15A and processes the image. The image processing device 100A is configured with a computer such as a personal computer. The image processing device 100A includes hardware such as a CPU and a memory. The image processing device 100A functionally has a configuration as described below by the CPU, the memory, and the like in cooperation with an image processing program stored in the memory or a storage device to perform predetermined processing.

Configuration of Image Processing Device

The image processing device 100A functionally includes a signal receiver 101, a generator 102, and an estimator 103. The signal receiver 101 receives a signal output from the detector 15A that corresponds to the quantity of light of the image 15m. The generator 102 generates a two-dimensional image (two-dimensional image data) of the sample 8 at a focal plane F, on the basis of a signal corresponding to the quantity of light from the detector 15A and the relative positional relationship between the illumination region 14 and the sample 8 when the quantity of light signal is detected.

Focal Plane

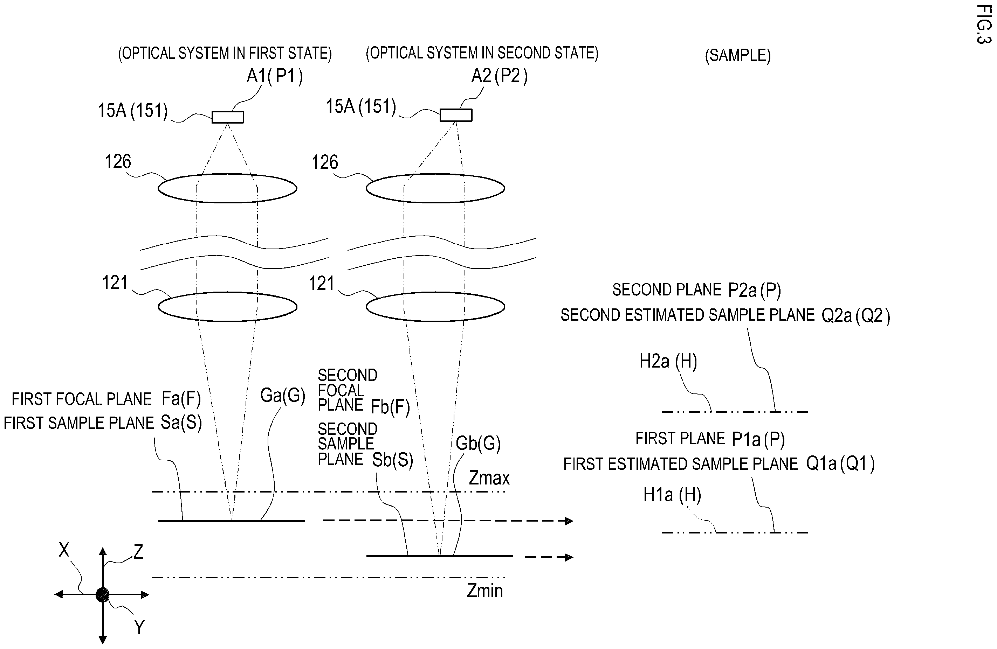

Fig. 3 is a diagram schematically illustrating the relation between a focal plane, a sample plane, a first plane, a second plane, and an estimated sample plane according to the embodiment.

The focal plane F in the optical system in each of the states is a plane defined from the three-dimensional point spread function of the optical system in each of the states. When the relative position of the detector 15A to the light source 11 changes, the three-dimensional point spread function through the optical system 12 changes. Thus, as illustrated in Fig. 3, the focal plane F in the optical system in each of the states can change its position in the optical axis direction (Z direction) depending on the position of the detector 15A relative to the light source 11. In the example in Fig. 3, the position of the detector 15A in the first state A1 (first position G1) and the position of the detector 15A in the second state A2 (second position G2) are different. Thus, the three-dimensional point spread function through the optical system differs between the first state A1 and the second state A2, and a first focal plane Fa, which is the focal plane in the first state A1, and a second focal plane Fb, which is the focal plane in the second state A2, may be different in position in the optical axis direction (Z direction). The first focal plane Fa and the second focal plane Fb may match in position in the optical axis direction (Z direction). In general, the first focal plane Fa and the second focal plane Fb match if the amount of movement of the detector 15A is equal to or smaller than the size of the point spread function of the optical system.

Here, in the present embodiment, the focal plane F is, for example, a plane (XY plane) where the center position of Gaussian exists when three-dimensional Gaussian fitting is performed to find an approximate function of the three-dimensional point spread function of the optical system 12 in each corresponding state. The focal plane F may be, for example, a plane (XY plane) at a position where the maximum of the three-dimensional point spread function of the optical system in each corresponding state exists in the Z direction, or a plane (XY plane) where the maximum of the integrated value of the three-dimensional point spread function of the optical system in each corresponding state in a plane intersecting the axial direction (Z direction) exists. In the present embodiment, the focal plane F is, for example, an XY plane in the Z coordinate where the center position of Gaussian exists when the three-dimensional point spread function of the optical system in a certain state is fitted by 3D Gaussian.

The detector 15A detects the image 15m at a plurality of positions in a plane orthogonal to the optical axis direction. Thus, the generator 102 generates a plurality of images G of the sample 8, on the basis of the quantity of light detected by the detector 15A at a plurality of positions in a plane orthogonal to the optical axis direction. As illustrated in Fig. 3, the generator 102 generates a first image Ga of a plane of the sample 8 (which is referred to as first sample plane Sa) at a position corresponding to the first focal plane Fa in the Z direction, on the basis of the quantity of light detected by the detector 15A in the first state A1. The generator 102 generates a second image Gb of a plane of the sample 8 (which is referred to as second sample plane Sb) at a position corresponding to the second focal plane Fb in the Z direction, on the basis of the quantity of light detected by the detector 15A in the second state A2.

Definition of "Substantially Matching" of Focal Planes

Here, the respective focal planes F of the optical system in all states to acquire a plurality of images G of the sample generated by the generator 102 are identical or proximate in position in the Z direction. In the present embodiment, when the distribution of the Z coordinates of all focal planes F falls within 10% or less of the respective Z resolutions (full width half maximum(FWHM) of the Z profile of the three-dimensional point spread function) of the optical system in all states, a plurality of focal planes F are described as "substantially match".

Processing in Generator

As described above, the generator 102 generates two-dimensional images G of the sample 8 at all focal planes F, on the basis of a signal corresponding to the quantity of light from the detector 15A and the relative positional relationship between the illumination region 14 and the sample 8 when the quantity of light signal is detected. The two-dimensional image G is represented by the following Expression (1).

$$I(x, y, z) = \int s(x_p, y_p, z_p) h(x - x_p, y - y_p, z - z_p) dx_p dy_p dz_p \quad \cdots \quad (1)$$

Here, I(x,y,z) is the image G, h(x,y,z) is the three-dimensional point spread function in the optical system 12, and s(x,y,z) is the fluorescent molecule distribution in the sample 8.

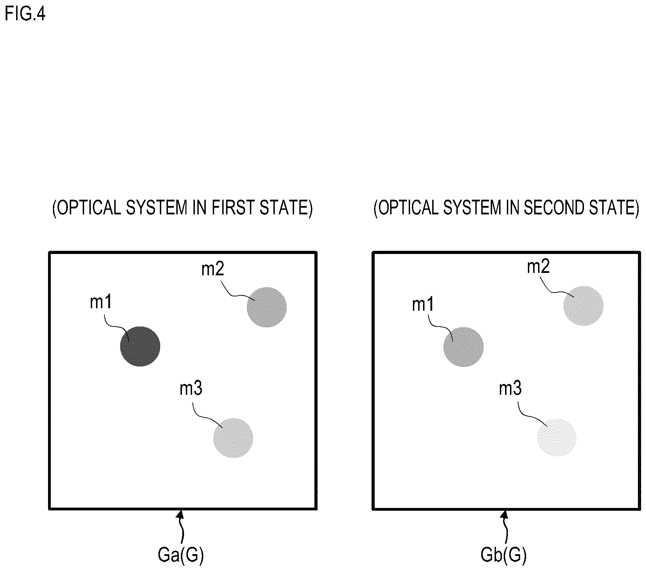

Fig. 4 is a diagram illustrating an example of a plurality of images generated by the generator.
As illustrated in Fig. 3 and Fig. 4, an image group of a plurality of images G generated by the generator 102 includes the first image Ga of the first focal plane Fa based on a signal from the detector 15A through the optical system 12 in the first state A1, and the second image Gb of the second focal plane Fb, which substantially matches the first focal plane Fa in the optical axis direction (Z direction), based on a signal from the detector 15A through the optical system 12 in the second state A2. The first image Ga is an observation image acquired in a state in which the first focal plane Fa matches the first sample plane Sa of the sample 8. The second image Gb is an observation image acquired in a state in which the second focal plane Fb matches the second sample plane Sb of the sample 8. Note that m1 to m3 are objects in the sample 8.

Processing in Estimator

Data of a plurality of images G generated by the generator 102 is input to the estimator 103. A plurality of images G are those taken in a state in which the focal plane F of the optical system in each state matches the corresponding sample plane S when the detector 15A is positioned at a plurality of positions in a plane orthogonal to the optical axis direction to detect the quantity of light of the image 15m. Here, the positions in the Z direction (Z coordinates) of the focal planes F of the optical system in all states to acquire a plurality of images G substantially match each other on the basis of the definition above.
The estimator 103 sets an estimated sample plane to estimate the structure in the sample 8. In the example in Fig. 3, the estimator 103 estimates the respective structures of the sample 8 at a first estimated sample plane Q1 at a position corresponding to the first plane P1 in the Z direction and a second estimated sample plane Q2 at a position corresponding to the second plane P2 in the Z direction. The first plane P1 is determined so as to substantially match the focal plane F. The first plane P1 is selected such that when the maximum of the z coordinates of the focal planes F of the optical system in all states to acquire a plurality of images G is Zmax and the minimum is Zmin, the Z coordinate of the first plane P1 is Zmax or less and Zmin or more. If the Z coordinates of the focal planes F of the optical system in all states to acquire a plurality of images G are identical, the Z coordinate of the first plane P1 is identical to the Z coordinate of the focal plane F. The estimator 103 estimates the respective structures of a plurality of estimated sample planes along the optical axis direction (Z direction) of the optical system 12, on the basis of a plurality of images G generated by the generator 102, and outputs an estimated image Ie of the first estimated sample plane Q1.
The second plane P2 is set on a non-focal plane. In other words, the second plane P2 is set outside the range (Zmin to Zmax) of z coordinate of the focal plane F. Here, it is desirable that the estimator 103 selects the second plane P2 such that when the minimum of all Z resolutions of the optical system in all states to acquire a plurality of images G of the sample input to the estimator 103 is $\delta z$, the difference between the Z coordinate of the second plane P2 (z = z2) and the Z coordinate of the first plane P1 (z = z1) is greater than $0.05\delta z$ and $0.5\delta z$ or less.

The estimator 103 calculates or stores in advance two-dimensional point spread functions of the first plane P1 and the second plane P2 in the three-dimensional point spread function of the optical system in each of all states to acquire a plurality of images G. In the three-dimensional point spread function h(x,y,z) of the optical system in each of the states described above, the point spread function h(x,y,z1) when the z coordinate is the z coordinate of the first plane P1 (z = z1) is defined as a two-dimensional point spread function H1 in the first plane P1. The point spread function h(x,y,z2) when the z coordinate is the z coordinate of the second plane P2 (z = z2) is defined as a two-dimensional point spread function H2 in the second plane P2.

Relative Relationship of Two-Dimensional Point Spread Function in Plurality of Planes

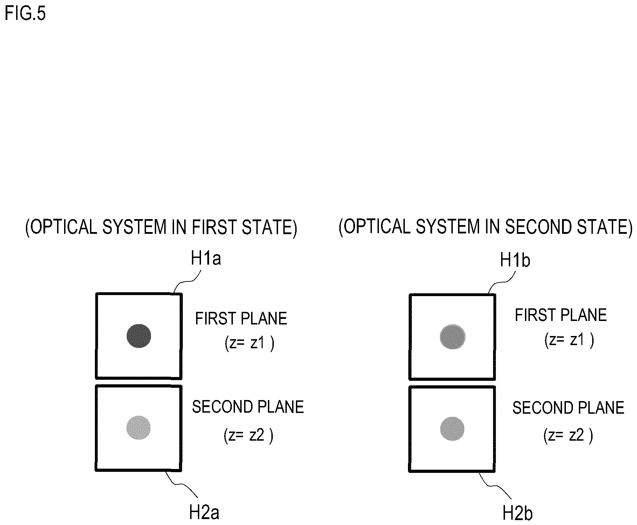

Fig. 5 is a diagram illustrating an example of a two-dimensional point spread function of the first plane P1 and a two-dimensional point spread function of the second plane P2 in the optical system in the first state, and a two-dimensional point spread function of the first plane P1 and a two-dimensional point spread function of the second plane P2 in the optical system in the second state, according to the embodiment.

In the present embodiment, as illustrated in Fig. 5, a first relative relationship between a two-dimensional point spread function H1a of the first plane P1 and a two-dimensional point spread function H2a of the second plane P2 in a first three-dimensional point spread function based on the optical system in the first state A1 is different from a second relative relationship between a two-dimensional point spread function H1b of the first plane P1 and a two-dimensional point spread function H2b of the second plane P2 in a second three-dimensional point spread function based on the optical system in the second state A2 different from the first state A1.

The estimator 103 estimates the respective structures of a plurality of planes including the first estimated sample plane Q1 in the sample 8 along the optical axis direction (Z direction) of the optical system 12, by using at least one set of images G. In the example in Fig. 3, the estimator 103 takes advantage of the difference in relative relationship between the two-dimensional point spread functions and separately estimates the structures of the sample 8 in the first estimated sample plane Q1 and the second estimated sample plane Q2 by using at least one set of images G. If there is no difference in the relative relationship between the two-dimensional point spread functions, it is impossible to accurately estimate the structures of the sample 8 in the first estimated sample plane Q1 and the second estimated sample plane Q2.

Estimation Based on Relative Intensity of Two-Dimensional Point Spread Function

The estimator 103 can estimate the structures of the sample 8 in the first estimated sample plane Q1 and the second estimated sample plane Q2, for example, on the basis of the difference in relative intensity between the two-dimensional point spread function in the first plane P1 and the two-dimensional point spread function in the second plane P2. In this case, it is desirable that there is a predetermined difference between a first relative intensity between the two-dimensional point spread function of the first plane P1 and the two-dimensional point spread function of the second plane P2 in the optical system in the first state A1 and a second relative intensity between the two-dimensional point spread function of the first plane P1 and the two-dimensional point spread function of the second plane P2 in the optical system in the second state A2. When the sum of the two-dimensional point spread function H1a of the first plane P1 of the optical system in the first state A1 is $I^f{}_1$, the sum of the two-dimensional point spread function H1b of the second plane P2 of the optical system in the first state A1 is $I^{df}{}_1$, the sum of two-dimensional point spread function H1b of the first plane P1 of the optical system in the second state A2 is $I^f{}_2$, and the sum of the two-dimensional point spread function H2b of the second plane P2 of the optical system in the second state A2 is $I^{df}{}_2$, for example, it is desirable that the following Expression (2) or (3) is satisfied.

$$I^{df}_1 I^f_2 / I^f_1 I^{df}_2 > 1.1 \quad \cdots (2)$$

$$I^{df}_1 I^f_2 / I^f_1 I^{df}_2 < 0.9 \quad \cdots (3)$$

Estimation of Three-Dimensional Distribution of Object

Various known algorithms such as the Wiener filter, a gradient method, and the Richardson-Lucy method can be employed for estimation of an object in the estimator 103. Here, for example, it is assumed that an algorithm by a gradient method is used. A two-dimensional image Im taken by the detector 15A disposed at the m-th position is represented by the following Expression (4).

$$I_m = A_m s \quad \cdot \cdot \cdot \quad (4)$$

Here, s is a P-dimensional vector representing a three-dimensional fluorescent molecule distribution, and $A_m$ is an N×P matrix represented by the following Expression (5) (N = Nx × Ny).

$$[A_m s](x_n, y_n) = \sum_{p=1}^{p} s(x_p, y_p, z_p) h_m(x_n - x_p, y_n - y_p, 0 - z_p) \quad \cdot \cdot \cdot \quad (5)$$

Here, $(x_n, y_n)$ is the coordinates of the illumination region 14 of illumination light L1, and $(x_p, y_p, z_p)$ is the coordinates of a sample space. $h_m$ represents the three-dimensional point spread function of the optical system in a case (state) where the detector 15A is disposed at the m-th position.

The estimator 103 estimates a fluorescent molecule distribution in the sample 8 by minimizing an error function F(s) represented by the following Expression (6).

$$F(s) = \sum_{m=1}^{M} \sum_{n=1}^{N} \left\| (I_m^{mes})_n - (A_m s)_n \right\|^2 \quad \cdot \cdot \cdot \quad (6)$$

Here, $I^{mes}$ is an image (N-dimensional vector) actually acquired by the detector 15A disposed at the m-th position. Assuming that s = $\rho^2$ to ensure the positivity of the P-dimensional vector, the error function F(s) in the above Expression (6) is represented by the following Expression (7) .

$$F(s) = \sum_{m=1}^{M} \sum_{n=1}^{N} \left\| (I_m^{mes})_n - (A_m \rho^2)_n \right\|^2 \quad \cdot \cdot \cdot \quad (7)$$

The estimator 103 performs a process to find ρ such that the error function represented by the above Expression (7) is minimized. In the estimator 103, the following Expression (8) is obtained in the i-th iteration by using a gradient method.

$$\rho^{i+1} = \rho^i + \alpha d^i \quad \cdot \cdot \cdot \quad (8)$$

Here, $d^i$ is the gradient of the error function F(s) with respect to ρ, and α is a coefficient that specifies the amount of progress in the gradient direction. The fluorescent molecule distribution can be obtained by s = $\rho^2$ from the value of ρ when the rate of change of ρ becomes small as the number of iterations is increased, or when the number of iterations specified in advance is reached.

The estimator 103 estimates the fluorescent molecule distributions in the first estimated sample plane Q1 and the second estimated sample plane Q2.

The estimator 103 separately estimates the structures of the sample 8 in the first estimated sample plane Q1 and the second estimated sample plane Q2, but a plurality of the second estimated sample planes Q2 may be set at different positions along the optical axis direction (Z direction) of the optical system 12. For example, the second estimated sample planes Q2 may be set on the + side and the - side of the optical axis direction (Z direction) with respect to the first estimated sample plane Q1.

Image Processing Method

An image processing method in the microscope body 10A as described above will now be described. In the image processing method described below, each process performed by the image processing device 100A of the microscope body 10A is performed by the image processing device 100A on the basis of a program stored in advance in the image processing device 100A. The program may be recorded on a computer-readable storage medium (for example, non-transitory recording media, non-transitory tangible media) and provided.

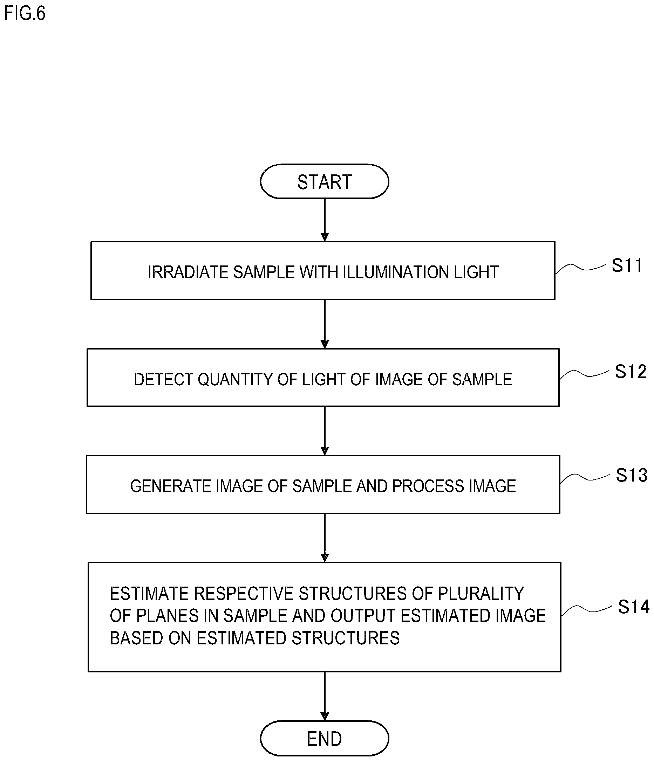

Fig. 6 is a flowchart illustrating the flow of the image processing method according to the embodiment. As illustrated in Fig. 6, at step S11, the sample 8 set on the stage 2 is irradiated with the illumination light L1 from the light source 11. The sample 8 held on the stage 2 is irradiated with the illumination light L1 emitted from the light source 11 through the collimator lens 120, the optical path separator 125, the deflector 124, the pupil projection lens 122, the imaging lens 123, and the objective lens 121. As a result, the illumination region 14 in which the illumination light L1 is gathered by the objective lens 121 is formed on the sample 8. The scanning controller 13 controls the swing of the deflector 124 to scan the illumination region 14 in two dimensions in the XY direction on the sample 8. In a period of time in which the illumination region 14 is scanned in two dimensions in the XY direction on the sample 8, the relative positional relationship in the Z direction between the sample 8 and the objective lens 121 is not changed (maintained and fixed), and the illumination region 14 is scanned in a predetermined Z plane of the sample 8. The light (signal light) L2 emitted from the sample 8 by irradiation of the illumination region enters the detector 15A through the objective lens 121, the imaging lens 123, the pupil projection lens 122, the deflector 124, the optical path separator 125, and the condenser lens 126.

At step S12, the detector controller 16 moves the detector 15A to a plurality of positions in the XY plane, and at each position, the detector 15A detects the quantity of light of the image 15m of fluorescence of the sample 8 formed on the light-receiving surface of the detector 15A. The photoelectric converter (not illustrated) of the detector 15A outputs a signal (electrical signal) corresponding to the quantity of received light to the image processing device 100A. Even when the detector 15A is moved to a plurality of positions in the XY plane, the relative positional relationship in the Z direction between the sample 8 and the objective lens 121 is not changed (maintained and fixed), and the illumination region 14 is scanned in a predetermined Z plane of the sample 8.

At step S13, the image processing device 100A generates an image G of the sample 8 on the basis of a signal from the detector 15A and processes the generated image G. The signal receiver 101 of the image processing device 100A receives a signal output from the detector 15A that corresponds to the quantity of light of the image 15m of fluorescence of the sample 8 received by the photoelectric converter (not illustrated). The generator 102 generates a two-dimensional image G of the sample 8 at the focal plane F, on the basis of a signal output from the detector 15A and the relative positional relationship between the illumination region 14 and the sample 8 when the light signal is detected. Here, the generator 102 generates a plurality of images G (image group) based on the quantity of light detected by the detector 15A at a plurality of positions in the XY plane. The image G is an image acquired without changing the relative positional relationship in the Z direction between the sample 8 and the objective lens 121 (optical system 12). The image group of a plurality of images G generated by the generator 102 includes the first image Ga of the first focal plane Fa based on a signal from the detector 15A through the optical system 12 in the first state A1 in which the detector 15A is located in the first position G1, and the second image Gb of the second focal plane Fb, which substantially matches the first focal plane Fa in the optical axis direction (Z direction), based on a signal from the detector 15A through the optical system 12 in the second state A2 in which the detector 15A is located in the second position G2. The first image Ga is acquired in a state in which the first focal plane Fa matches the first sample plane Sa of the sample 8. The second image Gb is acquired in a state in which the second focal plane Fb matches the second sample plane Sb of the sample 8.

At step S14, the estimator 103 estimates the respective structures of a plurality of planes in the sample 8 along the optical axis direction (Z direction) of the optical system, on the basis of the image group generated by the generator 102, and outputs an estimated image Ie based on the estimated structures. The estimator 103 receives data of a plurality of images G (image group) generated by the generator 102. The estimator 103 calculates or stores in advance the respective two-dimensional point spread functions of the first plane P1 and the second plane P2 in the three-dimensional point spread function based on the optical system. The first plane P1 is determined so as to substantially match the focal plane F. The second plane P2 is a non-focal plane and differs from the first plane P1 in the optical axis direction (Z direction) of the optical system.

The first relative relationship between the two-dimensional point spread function of the first plane P1 and the two-dimensional point spread function of the second plane P2 in the first three-dimensional point spread function based on the optical system in the first state A1 is different from the second relative relationship between the two-dimensional point spread function of the first plane P1 and the two-dimensional point spread function of the second plane P2 in the second three-dimensional point spread function based on the optical system in the second state A2 different from the first state A1. The estimator 103 uses at least one set of images G to estimate the respective structures of a plurality of planes including the first estimated sample plane Q1 in the sample 8 along the optical axis direction (Z direction) of the optical system. The sample plane S corresponding to the first plane P1 is defined as the first estimated sample plane Q1, and the sample plane S corresponding to the second plane P2 is defined as the second estimated sample plane Q2. The estimator 103 estimates the structures of the sample 8 in the first estimated sample plane Q1 and the second estimated sample plane Q2, for example, on the basis of the relative intensity between the two-dimensional point spread function in the first plane P1 and the two-dimensional point spread function in the second plane P2.

As described above, the estimator 103 estimates the respective structures of a plurality of estimated sample planes and outputs an estimated image Ie based on the estimated structures. For example, the estimated image in the first estimated sample plane Q1 and the estimated image in the second estimated sample plane Q2 are given respective different weights and added together (integrated) to form the image Ie.

$$I_e = \sum_k w_k \times [\text{Estimate image in estimated sample plane } Q_k]$$

Here, $w_k$ is the weight for the estimated image in the k-th estimated sample plane $Q_k$ and can take any real number. When the weight for the estimated image in the first estimated sample plane Q1 is larger than the weight for the estimated image in the second estimated sample plane Q2, the estimated image Ie thus obtained has a relatively reduced structure of a non-focal plane, compared to the first image Ga and the second image Gb, and it can be said that the resolution in the optical axis direction (Z direction) is improved. Further, the sectioning thickness for the estimated image Ie can be changed by adjusting the weights.

Furthermore, the following modified three-dimensional point spread function as represented by the following expression with different weights for each z in the three-dimensional point spread function will be examined.

$$\tilde{h}_m(x, y, z) = \frac{1}{w_z} \times h_m(x, y, z)$$

Here, $w_z$ is the weight for each z of the three-dimensional point spread function and can take any positive real number other than 0.

Using this, Expression (5) can be rewritten as follows.

$$[\tilde{A}_m \tilde{s}](x_n, y_n) = \sum_p \tilde{s}(x_p, y_p, z_p) \tilde{h}_m(x_n - x_p, y_n - y_p, 0 - z_p)$$

Here,

$$\tilde{s}(x, y, z) = w_z \times s(x, y, z)$$

is an estimated structure with different weights for each z. This indicates that a structure with different weights for each z can be estimated by using the modified three-dimensional point spread function. In this case, an estimated image Ie equivalent to the above can be obtained by integrating the estimated images at respective estimated sample planes with a weight 1.

$$I_e = \sum_k [\text{Estimate image in estimated sample plane } Q_k]$$

The flowchart illustrating the flow of the image processing method in Fig. 6 is applicable to other embodiments. In other words, although other embodiments differ in the microscope body (the configuration of the optical system and the type of the detector) and the image processing device (consequently, differ in the optical system in the first state and the optical system in the second state), the content of each step in the flowchart is applicable by applying the configuration and functions of the microscope body and the image processing device in each embodiment.

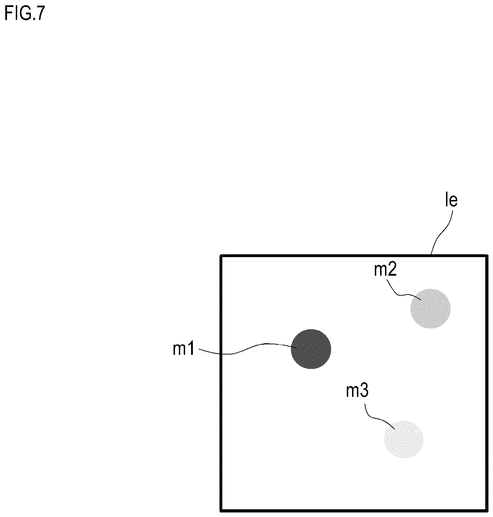

Fig. 7 is a diagram illustrating an example of the estimated image Ie based on a structure estimated by the estimator in the first embodiment.

As described above, a plurality of first image Ga and second image Gb (see Fig. 4) acquired in the first state A1 and the second state A2 are analyzed in the estimator 103, so that the estimated image Ie is output, in which objects m2 and m3 that do not exist in the first estimated sample plane Q1 are removed or reduced, and an object m1 that exists in the first estimated sample plane Q1 is emphasized.

In the microscope 1A and the image processing device 100A as described above, the detector 15A constituted with the point detector 151 performs detection at a plurality of positions, so that the respective structures of a plurality of planes including the first estimated sample plane Q1 in the sample 8 are estimated on the basis of an image group including the first image Ga of the first focal plane Fa based on a signal from the point detector 151 in the first state A1 and the second image Gb of the second focal plane Fb based on a signal from the point detector 151 in the second state A2. The sample structure therefore can be estimated on the basis of more image information obtained by the point detector 151 performing detection at a plurality of positions. As a result, an object that exists in the first estimated sample plane Q1 can be estimated more accurately, and an estimated image Ie with improved Z resolution and sectioning thickness can be obtained.

As used herein the Z resolution refers to the full width half maximum(FWHM) of the Z profile in the (x,y) coordinates in which the peak intensity of the three-dimensional point spread function exists. The sectioning thickness refers to the full width half maximum(FWHM) of the Z profile of the integrated value in the xy plane of a three-dimensional point image(three-dimensional point spread function).

[Second Embodiment]

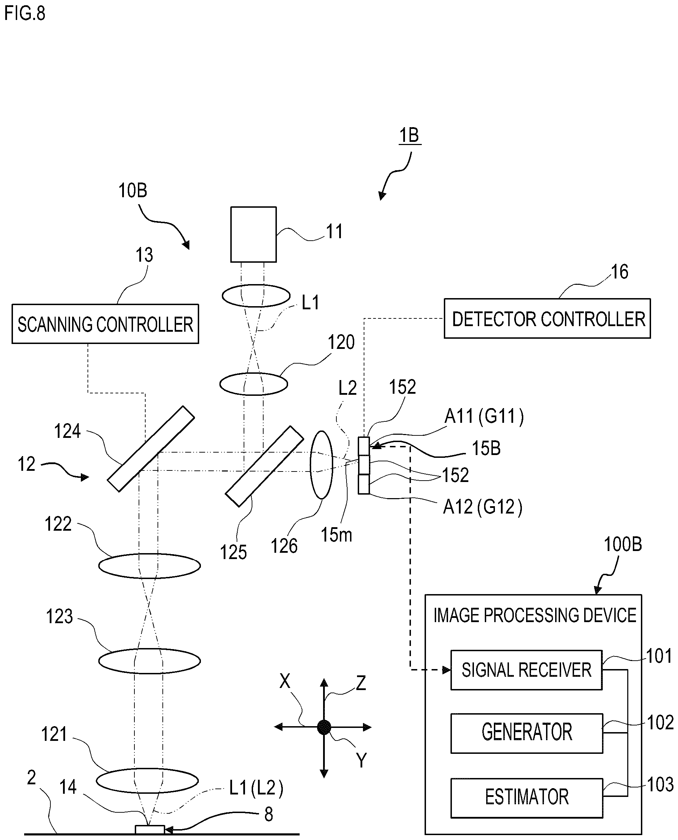

A second embodiment will be described. Fig. 8 is a schematic diagram illustrating an example configuration of a microscope according to the second embodiment. In the present embodiment, the same configuration as in the embodiment described above may be denoted by the same reference signs and a description thereof may be omitted or simplified. As illustrated in Fig. 8, a microscope 1B includes a microscope body 10B and an image processing device 100B. The microscope body 10B includes a light source 11, an optical system 12, a scanning controller 13, and a detector 15B.

The optical system 12 of the microscope body 10B irradiates a sample 8 with illumination light L1 from the light source 11 and guides signal light L2 from the sample 8 to the detector 15B.

In the present embodiment, the detector 15B includes a plurality of point detectors 152. The point detectors 152 are disposed in a plane orthogonal to the optical axis direction of signal light L2. The point detectors 152 are integrally mounted on a not-illustrated base member or the like. Here, the number, arrangement, and the like of the point detectors 152 are not limited. For example, the point detectors 152 may be arranged linearly in one direction along a plane orthogonal to the optical axis direction of the signal light L2. Alternatively, the point detectors 152 may be discretely disposed in a plane orthogonal to the optical axis direction of the signal light L2. In Fig. 8, for example, three point detectors 152 are arranged along the vertical direction of the drawing sheet in Fig. 8.

Each of the point detectors 152 includes a photoelectric converter (not illustrated) composed of a semiconductor or the like. The photoelectric converter (not illustrated) of each point detector 152 outputs a signal (electrical signal) corresponding to the quantity of received light to the image processing device 100B. The detector 15B detects the quantity of light of an image 15m at a plurality of positions in a plane orthogonal to the optical axis direction in the respective point detectors 152.

Three-Dimensional Point Spread Function of Optical System

The point detectors 152 that constitute the detector 15B differ from each other in position in a plane orthogonal to the optical axis direction. Thus, the relative position to the light source 11 varies among the point detectors 152. When the relative position of the detector 15B to the light source 11 changes, the three-dimensional point spread function (3D-PSF) through the optical system 12 differs, as illustrated in Fig. 2. As illustrated in Fig. 8, when attention is given to two point detectors 152 among the point detectors 152, the three-dimensional point spread function through the optical system 12 differs between the detector 152 in a first state A11 located at a first position G11 and the point detector 152 in a second state A12 located at any second position G12 different from the first position G11 in a plane orthogonal to the optical axis direction.

The image processing device 100B generates a plurality of images of the sample 8 on the basis of signals from the point detectors 152 of the detector 15B and processes these images. The image processing device 100B includes a signal receiver 101, a generator 102, and an estimator 103, and each function is as described in the first embodiment and is also applicable in the present embodiment.

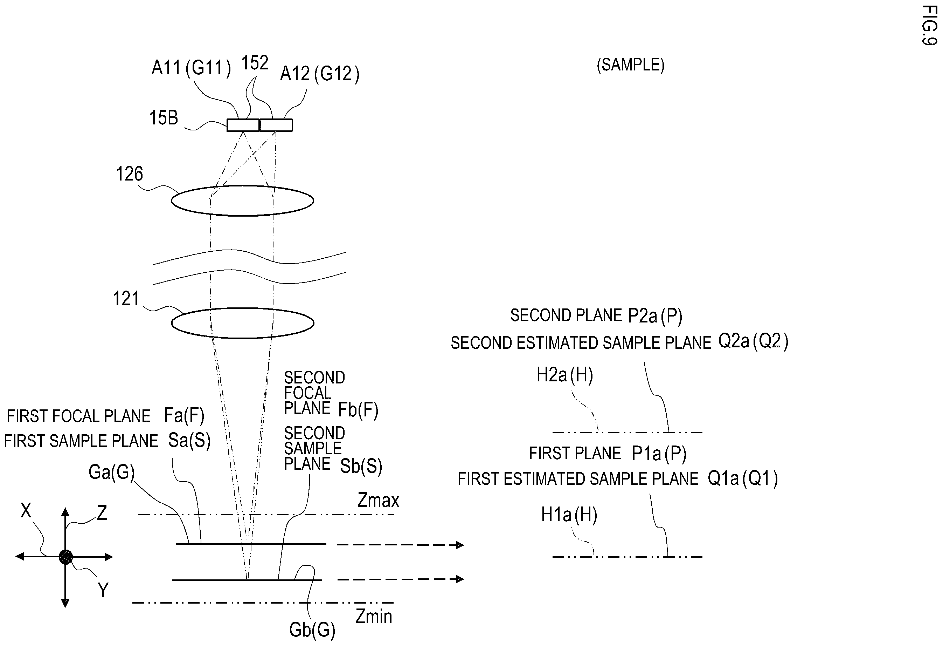

When the relative positions of the point detectors 152 to the light source 11 change, the three-dimensional point spread function through the optical system 12 changes. Thus, as illustrated in Fig. 9, the focal plane F in the optical system in each of the states can change its position in the optical axis direction (Z direction) depending on the positions of the point detectors 152 relative to the light source 11. In the example in Fig. 9, the three-dimensional point spread function through the optical system 12 differs between the detector 15B in the first state A11 located at the first position G11 and the detector 15B in the second state A12 located at the second position G12. The first focal plane Fa, which is the focal plane in the first state A11, and the second focal plane Fb, which is the focal plane in the second state A12, may differ in position in the optical axis direction (Z direction), but at least substantially match.

In the microscope 1B and the image processing device 100B as described above, since the detector 15B includes the point detectors 152, a large number of images can be acquired simultaneously. The sample structure therefore can be estimated on the basis of more image information obtained by the point detectors 152. As a result, an object existing in the first estimated sample plane Q1 can be estimated more easily, and an estimated image Ie with improved Z resolution and sectioning thickness can be obtained. Further, since the detector 15B includes the point detectors 152, detection of the quantity of light at a plurality of positions can be performed simultaneously to enable faster processing.

[Third Embodiment]

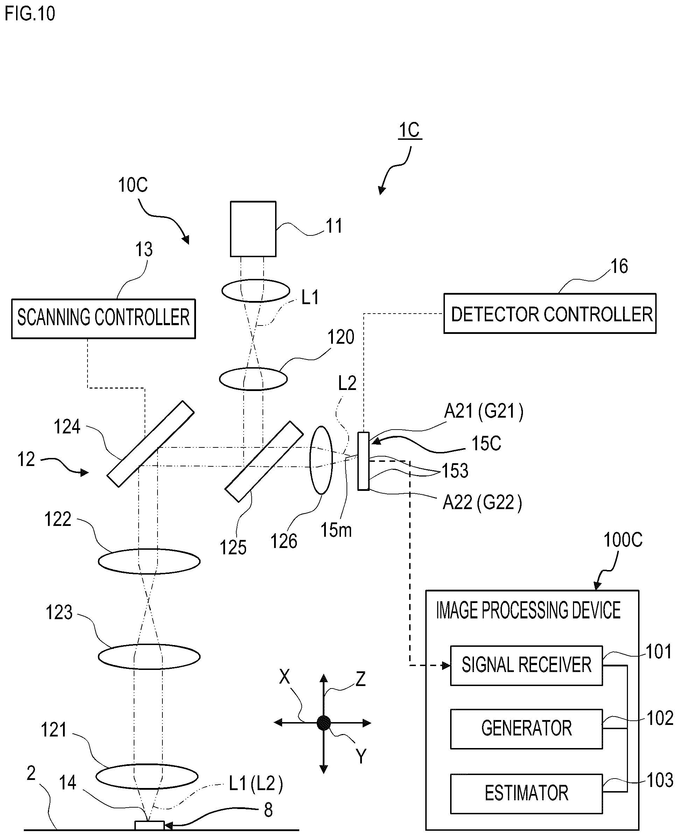

A third embodiment will be described. Fig. 10 is a schematic diagram illustrating an example configuration of a microscope according to the third embodiment. In the present embodiment, the same configuration as in the embodiment described above may be denoted by the same reference signs and a description thereof may be omitted or simplified. As illustrated in Fig. 10, a microscope 1C includes a microscope body 10C and an image processing device 100C. The microscope body 10C includes a light source 11, an optical system 12, a scanning controller 13, and a detector 15C. The optical system 12 of the microscope body 10C irradiates a sample 8 with illumination light L1 from the light source 11 and guides signal light L2 from the sample 8 to the detector 15C.

Configuration of Detector

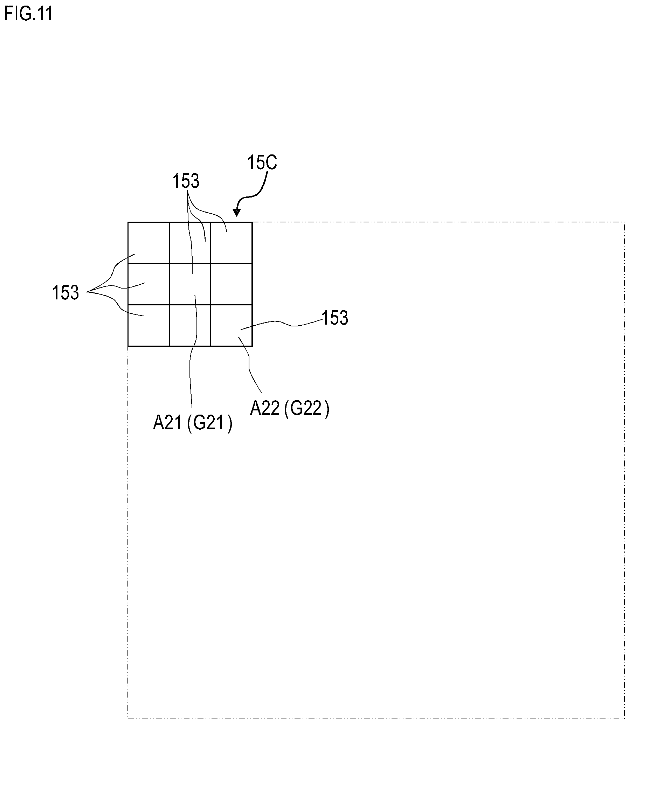

Fig. 11 is a schematic diagram illustrating a configuration of the detector according to the third embodiment. The detector 15C detects light of an image 15m formed on the light-receiving surface of the detector 15C. As illustrated in Fig. 11, in the present embodiment, the detector 15C is what is called a two-dimensional detector (2D detector), which is configured such that a plurality of detector sections 153 are arranged in two dimensions. In other words, the detector sections 153 are arranged in each of a first direction (horizontal direction on the drawing sheet in Fig. 11) along a plane orthogonal to the optical axis direction and a second direction (vertical direction on the drawing sheet in Fig. 11) along a plane orthogonal to the optical axis direction and intersecting the first direction. Here, each of the detector sections 153 is a pixel that detects light and has a light-receiving surface sufficiently smaller than an image 15m of fluorescence of the sample 8. The detector section 153 includes a photoelectric converter (not illustrated) composed of a semiconductor or the like. The light-receiving surface of the detector 15C receives light of the image 15m. Each of the detector sections 153 that constitute the detector 15C outputs a signal (electrical signal) corresponding to the quantity of received light to the image processing device 100C.

When attention is given to the positions of two of the detector sections 153, the three-dimensional point spread function of the optical system in a first state A21 that includes the light source 11, the optical system 12, and the detector section 153 located at a first position G21 differs from the three-dimensional point spread function of the optical system in a second state A22 that includes the light source 11, the optical system 12, and the detector section 153 located at a second position G22.

Three-Dimensional Point Spread Function of Optical System

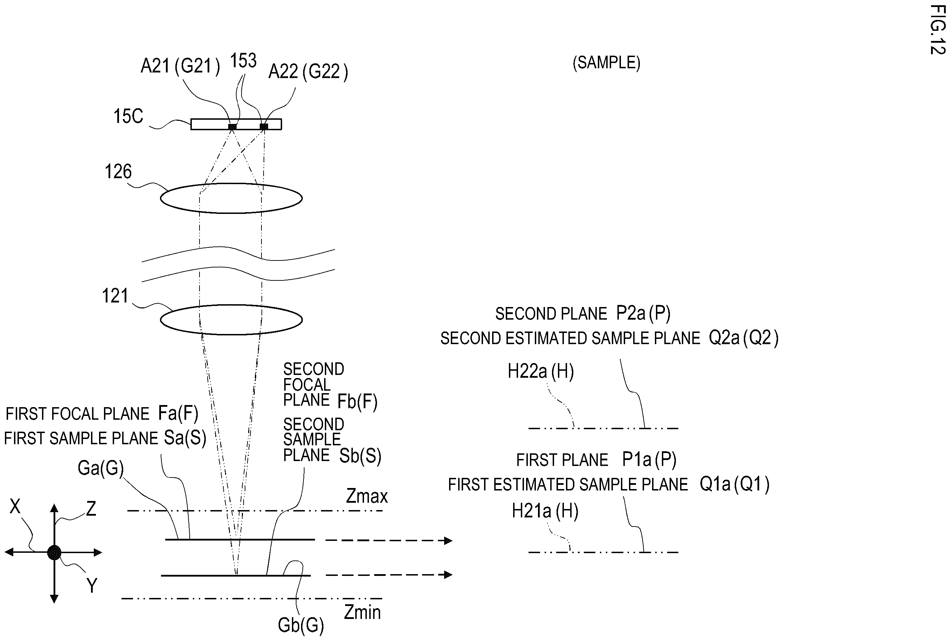

Fig. 12 is a diagram schematically illustrating the relation between a focal plane, a sample plane, a first plane, a second plane, and an estimated sample plane according to the third embodiment. When the position in a plane orthogonal to the optical axis direction differs among the detector sections 153 of the detector 15C, the relative position to the light source 11 changes. When the relative position of the detector sections 153 of the detector 15C to the light source 11 changes, the three-dimensional point spread function (3D-PSF) through the optical system 12 differs, as illustrated in Fig. 2. In other words, as illustrated in Fig. 12, in the detector sections 153 that constitute the detector 15C, the three-dimensional point spread function of the optical system in the first state A21 that includes the light source 11, the optical system 12, and the detector section 153 located at the first position G21 differs from the three-dimensional point spread function of the optical system in the second state A22 that includes the light source 11, the optical system 12, and the detector section 153 located at the second position G22.

Configuration of Image Processing Device

The image processing device 100C generates a plurality of images of the sample 8 on the basis of signals from the detector sections 153 of the detector 15C and processes these images. The image processing device 100C includes a signal receiver 101, a generator 102, and an estimator 103, and each function is as described in the first embodiment and is also applicable in the present embodiment.

Focal Plane, Definition of "Substantially Matching" of Focal Planes

The focal plane F in the optical system in each of the states is a plane defined from the three-dimensional point spread function of the optical system in each of the states. In the present embodiment, the explanation in the first embodiment is also applicable. Thus, all focal planes substantially match.

In the microscope 1C and the image processing device 100C as described above, since the detector 15C includes the detector sections 153 arranged in two dimensions, detection of the quantity of light at a plurality of positions can be performed simultaneously to enable faster processing. Compared to the detectors 15A and 15B in the first and second embodiments, a more accurate estimated image Ie can be obtained because more image information can be obtained in the same scan time by the detector sections 153 arranged in two dimensions.

[Fourth Embodiment]

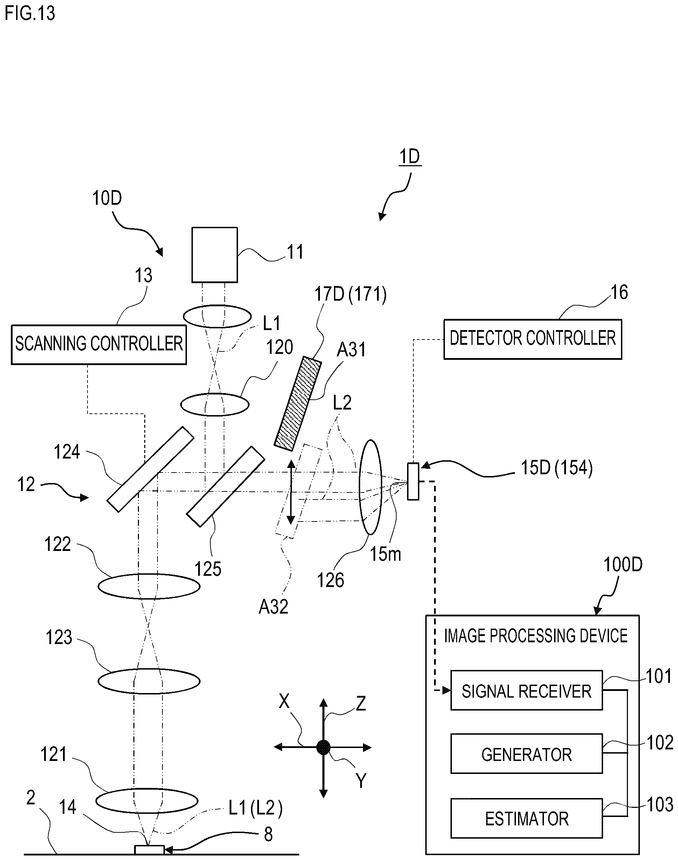

A fourth embodiment will be described. Fig. 13 is a schematic diagram illustrating an example configuration of a microscope according to the fourth embodiment. In the present embodiment, the same configuration as in the embodiment described above may be denoted by the same reference signs and a description thereof may be omitted or simplified. As illustrated in Fig. 13, a microscope 1D includes a microscope body 10D and an image processing device 100D. The microscope body 10D includes a light source 11, an optical system 12, a scanning controller 13, and a detector 15D.

The detector 15D detects signal light L2 from a sample 8. In the present embodiment, the detector 15D includes a point detector 154. The point detector 154 includes a photoelectric converter (not illustrated) composed of a semiconductor or the like. The photoelectric converter (not illustrated) of the point detector 154 respectively outputs a signal (electrical signal) corresponding to the quantity of received light to the image processing device 100D. In the present embodiment, the point detector 154 is fixedly provided.

In the present embodiment, an optical element 17D is provided in the optical system 12. The optical element 17D switches the optical system 12 between a first state A31 and a second state A32. The optical element 17D is provided such that it can be advanced or retracted relative to the optical path of signal light L2. The optical element 17D is configured to be switchable between the first state A31 in which the optical element 17D is located outside the optical path of the signal light L2 and the second state A32 in which the optical element 17D is advanced into the optical path of the signal light L2. In the present embodiment, a glass parallel plate 171 is provided as the optical element 17D. The glass parallel plate 171 is disposed, for example, between an optical path separator 125 and a condenser lens 126. In the second state A32 in which the glass parallel plate 171 is advanced into the optical path of the signal light L2, the signal light L2 shifts in a direction intersecting the optical axis direction (Z direction).

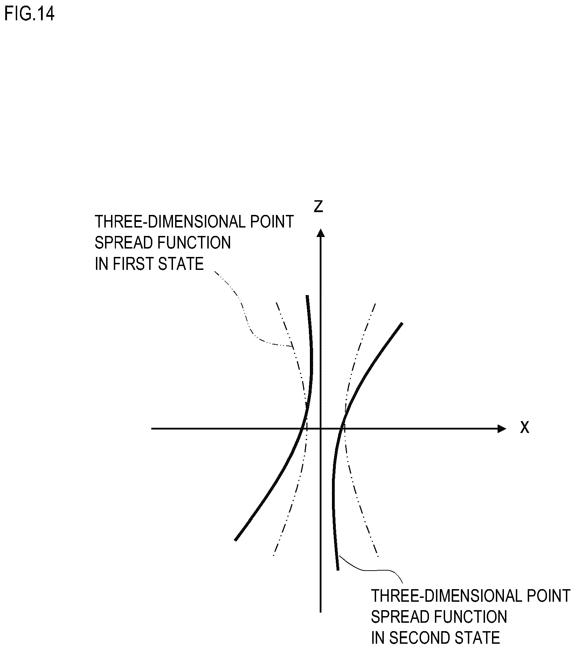

Fig. 14 is a diagram illustrating an approximate shape of the XZ cross section of the three-dimensional point spread function in the first state and an approximate shape of the XZ cross section of the three-dimensional point spread function in the second state according to the fourth embodiment. The three-dimensional point spread function (3D-PSF) through the optical system 12 changes as the signal light L2 shifts in a plane orthogonal to the optical axis direction (Z direction) between the first state A31 and the second state A32. As illustrated in Fig. 14, the three-dimensional point spread function through the optical system 12 differs between the first state A31 in which the glass parallel plate 171 is located outside the optical path of the signal light L2 and the second state A32 in which the glass parallel plate 171 is located on the optical path of the signal light L2. The three-dimensional point spread function in the second state A32 is inclined with respect to the three-dimensional point spread function in the first state A31.

The image processing device 100D generates an image of the sample 8 on the basis of a signal from the point detector 154 of the detector 15D and processes the image. The generator 102 generates an image of the focal plane F of the optical system on the basis of a signal from the point detector 154. The generator 102 generates an image G of the sample 8 on the basis of the quantity of light detected by the point detector 154 in each of the first state A31 in which the optical element 17D is located outside the optical path of the signal light L2 and the second state A32 in which the optical element 17D is advanced into the optical path of the signal light L2. The generator 102 generates a first image Ga of a plane of the sample 8 (first sample plane Sa) at a position corresponding to the first focal plane Fa in the Z direction, on the basis of the quantity of light detected by the detector 15D in the first state A31. The generator 102 generates a second image Gb of a plane of the sample 8 (second sample plane Sb) at a position corresponding to the second focal plane Fb in the Z direction, on the basis of the quantity of light detected by the detector 15D in the second state A32.

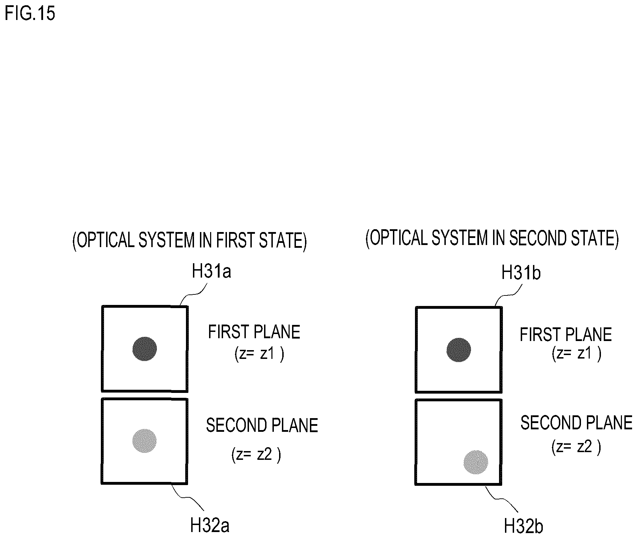

Fig. 15 is a diagram illustrating a two-dimensional point spread function in a first plane and a two-dimensional point spread function in a second plane in each of the optical system in the first state and the optical system in the second state according to the fourth embodiment.

As illustrated in Fig. 15, a first relative relationship between a two-dimensional point spread function H31a of the first plane P1 and a two-dimensional point spread function H32a of the second plane P2 in a first three-dimensional point spread function based on the optical system in the first state A31 is different from a second relative relationship between a two-dimensional point spread function H31b of the first plane P1 and a two-dimensional point spread function H32b of the second plane P2 in a second three-dimensional point spread function based on the optical system in the second state A32 different from the first state A31.

Estimation Based on Relative Position of Two-Dimensional Point Spread Function

The estimator 103 estimates the structures of the sample 8 in the first estimated sample plane Q1 and the second estimated sample plane Q2 on the basis of the relative relationship between the two-dimensional point spread function in the first plane P1 and the two-dimensional point spread function in the second plane P2. In the present embodiment, the estimator 103 estimates, for example, the structures of the sample 8 in the first estimated sample plane Q1 and the second estimated sample plane Q2, on the basis of the relative position between the two-dimensional point spread function in the first plane P1 and the two-dimensional point spread function in the second plane P2. Let $r^f_1$ be the centroid position vector of the two-dimensional point spread function H1a of the first plane P1 of the optical system in the first state A31, and $r^{df}_1$ be the centroid position vector of the two-dimensional point spread function H2a of the second plane P2 of the optical system in the first state A31. Furthermore, the relative position vector $r^{rel}_1$ of the two-dimensional point spread function H2a of the second plane P2 of the optical system in the first state A31 to the two-dimensional point spread function H1a of the first plane P1 of the optical system in the first state A31 is calculated by the following Expression (9).

$$r^{rel}_1 = r^{df}_1 - r^f_1 \ \dots \ (9)$$

Let $r^f_2$ be the centroid position vector of the two-dimensional point spread function H1b of the first plane P1 of the optical system in the second state A32, and $r^{df}_2$ be the centroid position vector of the two-dimensional point spread function H2b of the second plane P2 of the optical system in the second state A32. Furthermore, the relative position vector of the two-dimensional point spread function H2b of the second plane P2 of the optical system in the second state A32 to the two-dimensional point spread function H1b of the first plane P1 of the optical system in the second state A32 is calculated by the following Expression (10).

$$r^{rel}_2 = r^{df}_2 - r^f_2 \ \dots \ (10)$$

Here, the difference between the relative position vector $r^{rel}_1$ in the first state A31 and the relative position vector $r^{rel}_2$ in the second state A32 needs to be large to some extent, compared to the full width half maximum(FWHM) of the two-dimensional point spread function H1a of the first plane P1 in the first state

A31 and the two-dimensional point spread function H1b of the first plane P1 in the second state A32. Therefore, when the smaller one of the full width half maximum(FWHM) of the two-dimensional point spread function H1a of the first plane P1 in the first state A31 and the two-dimensional point spread function H1b of the first plane P1 in the second state A32 is $\sigma$, it is preferable that the following Expression (11) is satisfied.

$$\left\| r^{rel}_2 - r^{rel}_1 \right\| > 0.2\sigma \quad \cdots \ (11)$$

In the microscope 1D and the image processing device 100D as described above, the optical element 17D switches the optical system 12 between the first state A31 and the second state A32, whereby the respective structures of a plurality of planes including the first estimated sample plane Q1 in the sample 8 are estimated. The technique described in (Estimation of Three-Dimensional Distribution of Object) is employed as the estimation method. As a result, an object that exists in the first estimated sample plane Q1 can be estimated more accurately, and an estimated image with improved Z resolution and sectioning thickness can be obtained.

In the above fourth embodiment, the point detector 154 is used as the detector 15D. However, instead of the point detector 154, the point detectors 152 as described in the above second embodiment or the two-dimensional detector with the detector sections 153 arranged in two dimensions as described in the above third embodiment may be used. In the above fourth embodiment, the glass parallel plate 171 is provided as the optical element 17D, but instead of this, a phase plate may be used.

[Fifth Embodiment]

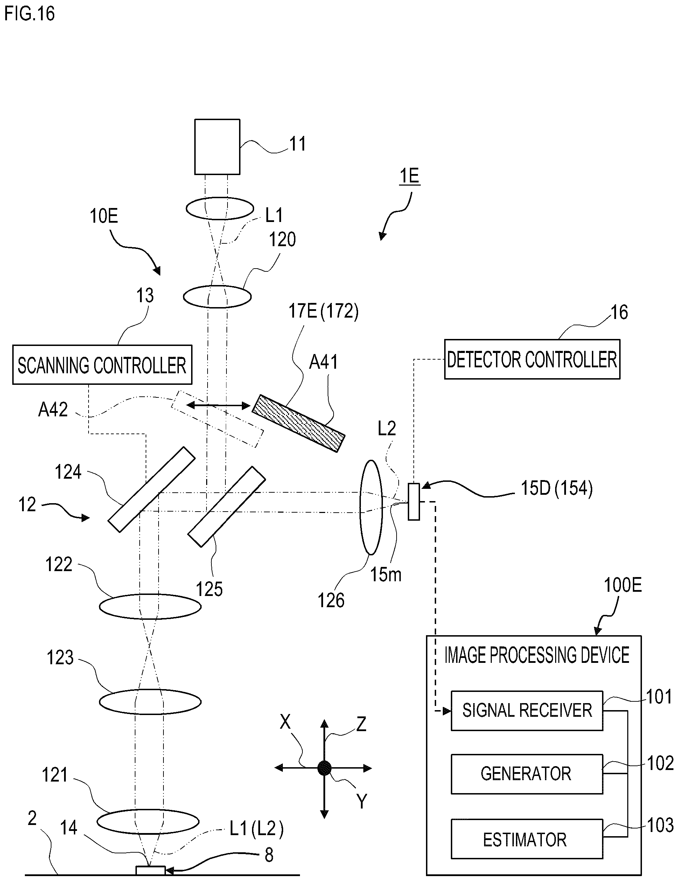

A fifth embodiment will be described. Fig. 16 is a schematic diagram illustrating an example configuration of a microscope according to the fifth embodiment. In the present embodiment, the same configuration as in the embodiment described above may be denoted by the same reference signs and a description thereof may be omitted or simplified. As illustrated in Fig. 16, a microscope 1E includes a microscope body 10E and an image processing device 100E. The microscope body 10E includes a light source 11, an optical system 12, a scanning controller 13, and a detector 15D.

In the present embodiment, an optical element 17E is provided in the optical system 12. The optical element 17E switches the optical system 12 between a first state A41 and a second state A42. The optical element 17E is provided such that it can be advanced or retracted relative to the optical path of illumination light L1. The optical element 17E is configured to be switchable between the first state A41 in which the optical element 17E is located outside the optical path of the illumination light L1 and the second state A42 in which the optical element 17E is advanced into the optical path of the illumination light L1. In the present embodiment, a glass parallel plate 172 is provided as the optical element 17E. The glass parallel plate 172 is disposed between a collimator lens 120 and an optical path separator 125. In the second state A42 in which the glass parallel plate 172 is advanced into the optical path of the illumination light L1, the illumination light L1 shifts in a direction intersecting the optical axis direction (Z direction).

The three-dimensional point spread function (3D-PSF) through the optical system 12 differs as the illumination light L1 shifts in a direction intersecting the optical axis direction (Z direction) between the first state A41 and the second state A42. Also in the present embodiment, as illustrated in Fig. 14, the three-dimensional point spread function in the second state A42 is inclined from the three-dimensional point spread function in the first state A41.

The generator 102 of the image processing device 100E generates a first image Ga of a plane of the sample 8 (first sample plane Sa) at a position corresponding to the first focal plane Fa in the Z direction, on the basis of the quantity of light detected by the detector 15D in the first state A41. The generator 102 generates a second image Gb of a plane of the sample 8 (second sample plane Sb) at a position corresponding to the second focal plane Fb in the Z direction, on the basis of the quantity of light detected by the detector 15D in the second state A42.

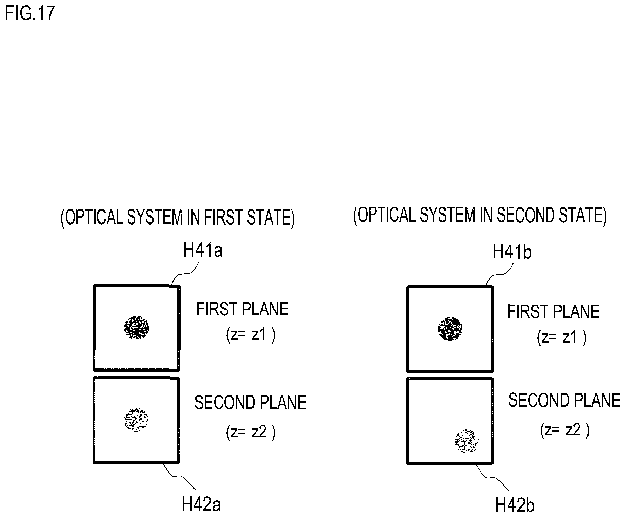

Fig. 17 is a diagram illustrating an example of a two-dimensional point spread function in a first plane and a two-dimensional point spread function in a second plane in the optical system in the first state and the optical system in the second state according to the fifth embodiment.

The estimator 103 estimates the structures of the sample 8 in the first estimated sample plane Q1 and the second estimated sample plane Q2 on the basis of the relative relationship between the two-dimensional point spread function in the first plane P1 and the two-dimensional point spread function in the second plane P2, in the same manner as in the above fourth embodiment. In the present embodiment, the estimator 103 estimates, for example, the structures of the sample 8 in the first estimated sample plane Q1 and the second estimated sample plane Q2, on the basis of the relative position between the two-dimensional point spread function in the first plane P1 and the two-dimensional point spread function in the second plane P2.

In the microscope 1E and the image processing device 100E as described above, the optical element 17E switches the optical system 12 between the first state A41 and the second state A42, whereby the respective structures of a plurality of planes including the first estimated sample plane Q1 in the sample 8 are estimated. As a result, an object that exists in the first estimated sample plane Q1 can be estimated more accurately, and an estimated image with improved Z resolution and sectioning thickness can be obtained.

In the above fifth embodiment, the point detector 154 is used as the detector 15D. However, instead of the point detector 154, the point detectors 152 as described in the above second embodiment or a two-dimensional detector with the detector sections 153 arranged in two dimensions as described in the above third embodiment may be used. In the above fifth embodiment, the glass parallel plate 172 is provided as the optical element 17E, but instead of this, a phase plate may be used.

[Sixth Embodiment]

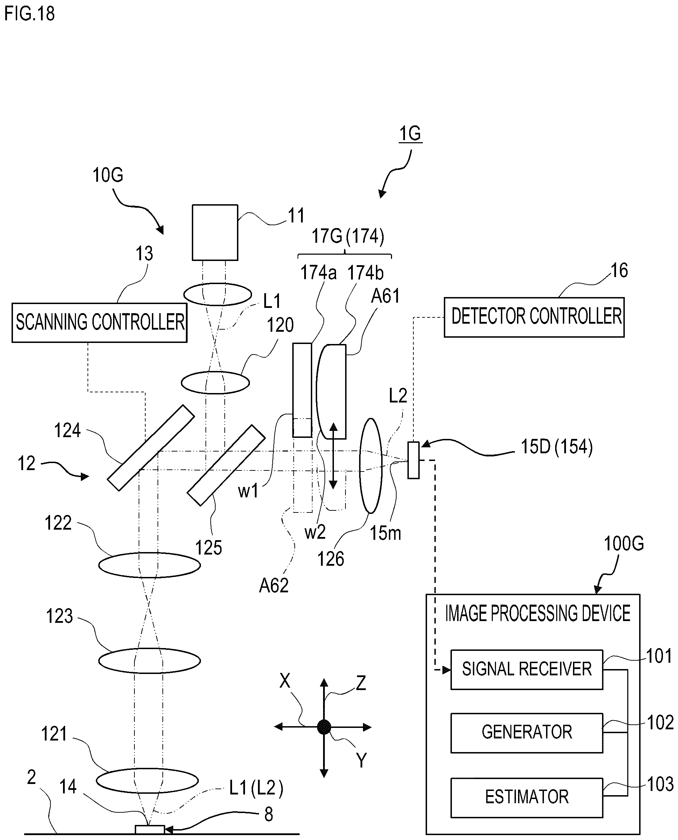

A sixth embodiment will be described. Fig. 18 is a schematic diagram illustrating an example configuration of a microscope according to the sixth embodiment. In the present embodiment, the same configuration as in the embodiment described above may be denoted by the same reference signs and a description thereof may be omitted or simplified. As illustrated in Fig. 18, a microscope 1G includes a microscope body 10G and an image processing device 100G. The microscope body 10G includes a light source 11, an optical system 12, a scanning controller 13, and a detector 15D.

In the present embodiment, an optical element 17G is provided in the optical system 12. The optical element 17G switches the optical system 12 between a first state A61 and a second state A62. The optical element 17G is provided such that it can be advanced or retracted relative to the optical path of signal light L2. The optical element 17G is configured to be switchable between the first state A61 in which the optical element 17G is located outside the optical path of the signal light L2 and the second state A62 in which the optical element 17G is advanced into the optical path of the signal light L2. In the present embodiment, a cylindrical lens 174 is provided as the optical element 17G. The cylindrical lens 174 is disposed between an optical path separator 125 and a condenser lens 126. In the second state A62 in which the cylindrical lens 174 is advanced into the optical path of the signal light L2, an image 15m of fluorescence formed on the light-receiving surface of the detector 15D is deformed.

In the present embodiment, the cylindrical lens 174 includes a pair of a first lens 174a and a second lens 174b along the optical axis direction of the optical path of the signal light L2.
The first lens 174a and the second lens 174b have curved surfaces w1 and w2 that cylindrically bulge. The curved surface w1 of the first lens 174a is formed in a cylindrical shape with its axis in a first direction (vertical direction on the drawing sheet in Fig. 18) along a plane intersecting the optical axis direction. The curved surface w2 of the second lens 174b is formed in a cylindrical shape with its axis in a second direction (direction orthogonal to the drawing sheet in Fig. 18) along a plane intersecting the optical axis direction. This suppresses the shift of the focal plane in the optical axis direction, and the focal planes in the first state and the second state substantially match.

The three-dimensional point spread function (3D-PSF) through the optical system 12 changes as the cylindrical lens 174 is advanced into or retracted from the optical path of the signal light L2 between the first state A61 and the second state A62. The three-dimensional point spread function through the optical system 12 differs between the first state A61 in which the cylindrical lens 174 is located outside the optical path of the signal light L2 and the second state A62 in which the cylindrical lens 174 is located on the optical path of the signal light L2.

The image processing device 100G generates an image of the sample 8 on the basis of a signal from the point detector 154 of the detector 15D and processes the image. The generator 102 generates an image of the focal plane F of the optical system on the basis of a signal from the point detector 154. The generator 102 generates an image G of the sample 8 on the basis of the quantity of light detected by the point detector 154 in each of the first state A61 and the second state A62. The generator 102 generates a first image Ga of a plane of the sample 8 (first sample plane Sa) at a position corresponding to the first focal plane Fa in the Z direction, on the basis of the quantity of light detected by the detector 15D in the first state A61. The generator 102 generates a second image Gb of a plane of the sample 8 (second sample plane Sb) at a position corresponding to the second focal plane Fb in the Z direction, on the basis of the quantity of light detected by the detector 15D in the second state A62.

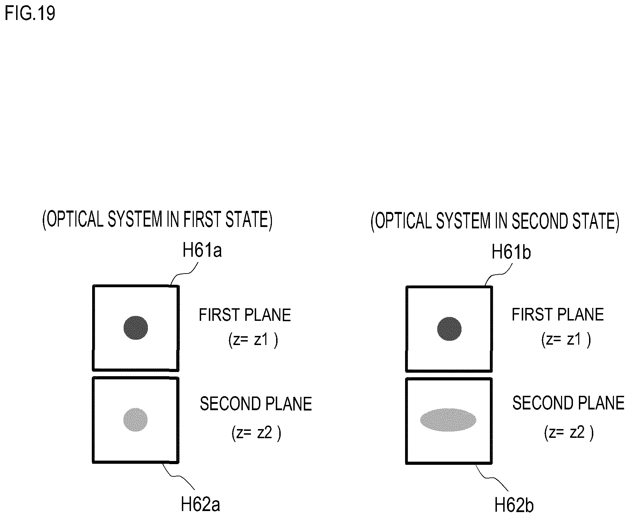

Fig. 19 is a diagram illustrating a two-dimensional point spread function in a first plane P1 and a two-dimensional point spread function in a second plane P2 in the optical system in the first state and the optical system in the second state according to the sixth embodiment. As illustrated in Fig. 19, a first relative relationship between a two-dimensional point spread function H61a of the first plane P1 and a two-dimensional point spread function H62a of the second plane P2 in a first three-dimensional point spread function based on the optical system 12 in the first state A61 is different from a second relative relationship between a two-dimensional point spread function H61b of the first plane P1 and a two-dimensional point spread function H62b of the second plane P2 in a second three-dimensional point spread function based on the optical system in the second state A62 different from the first state A61.

Estimation Based on Relative Shape of Two-Dimensional Point Spread Function

The estimator 103 estimates the structures of the sample 8 in the first estimated sample plane Q1 and the second estimated sample plane Q2 on the basis of the relative relationship between the two-dimensional point spread function in the first plane P1 and the two-dimensional point spread function in the second plane P2, in the same manner as in the above first embodiment. In the present embodiment, the estimator 103 estimates, for example, the structures of the sample 8 in the first estimated sample plane Q1 and the second estimated sample plane Q2, on the basis of the relative shape between the two-dimensional point spread function in the first plane P1 and the two-dimensional point spread function in the second plane P2. A frequency distribution O1a is obtained by shifting the two-dimensional point spread function H1a of the first plane P1 of the optical system in the first state A61 so that the centroid position vector comes to the origin and then performing a two-dimensional Fourier transform. A frequency distribution O2a is obtained by shifting the two-dimensional point spread function H2a of the second plane P2 of the optical system in the first state A61 so that the centroid position vector comes to the origin and then performing a two-dimensional Fourier transform. A frequency distribution O1b is obtained by shifting the two-dimensional point spread function H1b of the second plane P2 of the optical system in the second state A62 so that the centroid position vector comes to the origin and then performing a two-dimensional Fourier transform. A frequency distribution O2b is obtained by shifting the two-dimensional point spread function H2b of the second plane P2 of the optical system in the second state A62 so that the centroid position vector comes to the origin and then performing a two-dimensional Fourier transform.

The converted two-dimensional point spread functions H3 and H4 are calculated on the basis of the frequency distributions O1a, O2a, O1b, and O2b according to the following Expressions (12) and (13).

$$H_3 = FT^{-1}[O_{2a}O_{1b} \ / \ (O_{1a} + w)] \quad \cdots \ (1\,2)$$

$$H_4 = FT^{-1}[O_{2b}O_{1a} \ / \ (O_{1b} + w)] \quad \cdots \ (1\,3)$$

Here, $FT^{-1}$ denotes the inverse Fourier transform. w is a small number for preventing division by zero and, for example, $10^{-5}$. It is desirable that there is a sufficient difference in relative shape between the two-dimensional point spread functions. Thus, when the correlation coefficient between H2b and H3 is $\rho 1$ and the correlation coefficient between H2a and H4 is $\rho 2$, it is desirable that $\rho 1 < 0.9$ and $\rho 2 < 0.9$ hold.

In the microscope 1G and the image processing device 100G as described above, the optical element 17G switches the optical system 12 between the first state A61 and the second state A62, whereby the respective structures of a plurality of planes including the first estimated sample plane Q1 in the sample 8 are estimated. The technique described in (Estimation of Three-Dimensional Structure of Object) is employed as the estimation method. As a result, an object that exists in the first estimated sample plane Q1 can be estimated more accurately, and an estimated image with improved Z resolution and sectioning thickness can be obtained.

In the above sixth embodiment, the point detector 154 is used as the detector 15D. However, instead of the point detector 154, the point detectors 152 as described in the above second embodiment or a two-dimensional detector with the detector sections 153 arranged in two dimensions as described in the above third embodiment may be used.

[Seventh Embodiment]

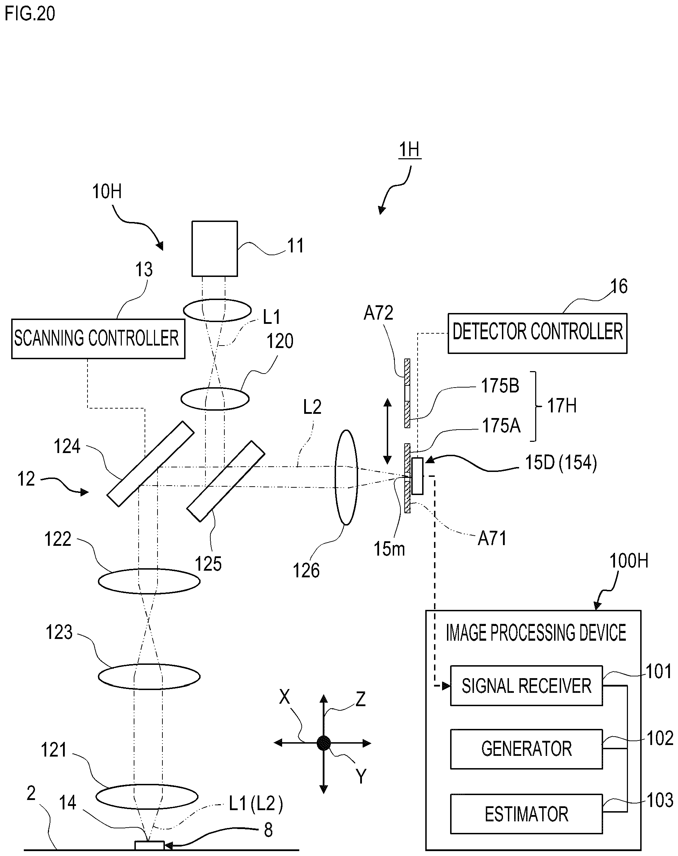

A seventh embodiment will be described. Fig. 20 is a schematic diagram illustrating an example configuration of a microscope according to the seventh embodiment. In the present embodiment, the same configuration as in the embodiment described above may be denoted by the same reference signs and a description thereof may be omitted or simplified. As illustrated in Fig. 20, a microscope 1H includes a microscope body 10H and an image processing device 100H. The microscope body 10H includes a light source 11, an optical system 12, a scanning controller 13, and a detector 15D.

In the present embodiment, an optical element 17H is provided in the optical system 12. The optical element 17H switches the optical system 12 between a first state A71 and a second state A72. In the present embodiment, pinhole members 175A and 175B are provided as the optical element 17H. The size (inner diameter) of the formed pinhole differs between the pinhole member 175A and the pinhole member 175B. For example, the size of the pinhole in one pinhole member 175A is smaller than the size of the pinhole in the other pinhole member 175B. Such pinhole members 175A and 175B are provided between a condenser lens 126 and the detector 15D such that they can be alternately advanced or retracted relative to the optical path of signal light L2.

The optical element 17H is configured to be switchable between the first state A71 in which the pinhole member 175A is located on the optical path of the signal light L2 and the second state A72 in which the pinhole member 175B is located on the optical path of the signal light L2. The quantity of light of signal light L2 passing through the pinhole differs between the first state A71 and the second state A72.

The three-dimensional point spread function through the optical system 12 differs between the first state A71 in which the pinhole member 175A is located on the optical path of the signal light L2 and the second state A72 in which the pinhole member 175B is located on the optical path of the signal light L2.

The generator 102 of the image processing device 100H generates a first image Ga of a plane of the sample 8 (first sample plane Sa) at a position corresponding to the first focal plane Fa in the Z direction, on the basis of the quantity of light detected by the detector 15D in the first state A71. The generator 102 generates a second image Gb of a plane of the sample 8 (second sample plane Sb) at a position corresponding to the second focal plane Fb in the Z direction, on the basis of the quantity of light detected by the detector 15D in the second state A72.

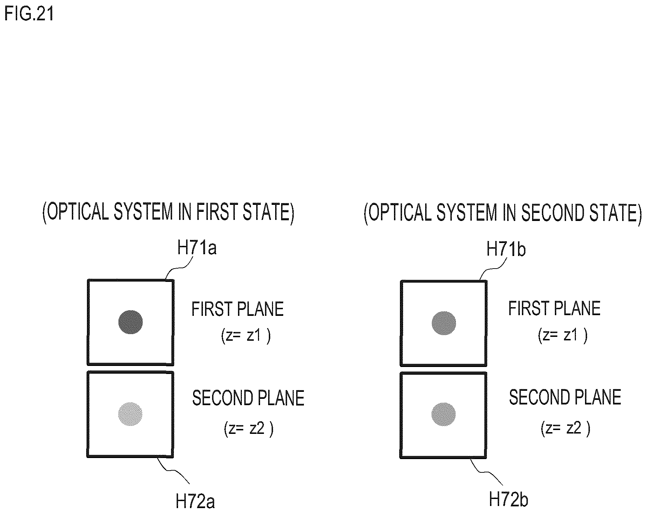

Fig. 21 is a diagram illustrating an example of a two-dimensional point spread function in a first plane and a two-dimensional point spread function in a second plane in the optical system in the first state and the optical system in the second state according to the seventh embodiment.

The estimator 103 estimates the structures of the sample 8 in the first estimated sample plane Q1 and the second estimated sample plane Q2 on the basis of the relative relationship between the two-dimensional point spread function in the first plane P1 and the two-dimensional point spread function in the second plane P2. In the present embodiment, the estimator 103 estimates, for example, the structures of the sample 8 in the first estimated sample plane Q1 and the second estimated sample plane Q2 on the basis of the relative intensity between the two-dimensional point spread function in the first plane P1 and the two-dimensional point spread function in the second plane P2, in the same manner as in the above first embodiment.

In the microscope 1H and the image processing device 100H as described above, the optical element 17H switches the optical system 12 between the first state A71 and the second state A72, whereby the respective structures of a plurality of planes including the first estimated sample plane Q1 in the sample 8 are estimated. As a result, an object that exists in the first estimated sample plane Q1 can be estimated more accurately, and an estimated image with improved Z resolution and sectioning thickness can be obtained.

In the above seventh embodiment, the point detector 154 is used as the detector 15D. However, instead of the point detector 154, the point detectors 152 as described in the above second embodiment or a two-dimensional detector with the detector sections 153 arranged in two dimensions as described in the above third embodiment may be used.

[Eighth Embodiment]

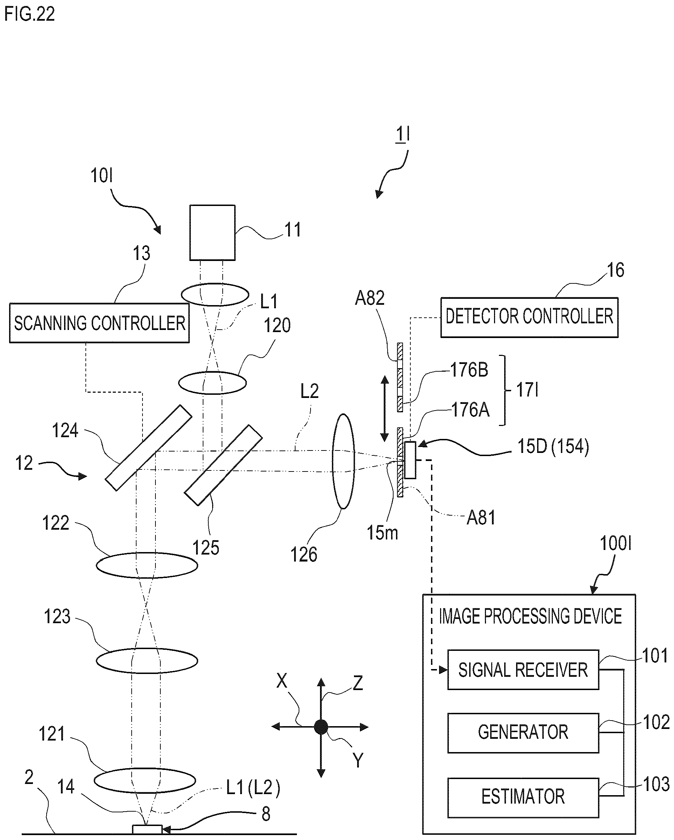

An eighth embodiment will be described. Fig. 22 is a schematic diagram illustrating an example configuration of a microscope according to the eighth embodiment. In the present embodiment, the same configuration as in the embodiment described above may be denoted by the same reference signs and a description thereof may be omitted or simplified. As illustrated in Fig. 22, a microscope 1I includes a microscope body 10I and an image processing device 100I. The microscope body 10I includes a light source 11, an optical system 12, a scanning controller 13, and a detector 15D.

In the present embodiment, an optical element 17I is provided in the optical system 12. The optical element 171 switches the optical system 12 between a first state A81 and a second state A82. In the present embodiment, pinhole members 176A and 176B are provided as the optical element 171. The pinhole members 176A and 176B are provided between a condenser lens 126 and the detector 15D such that they can be alternately advanced or retracted relative to the optical path of signal light L2. The shape of the formed pinhole differs between the pinhole member 176A and the pinhole member 176B. For example, the pinhole of one pinhole member 176A has, for example, a circular shape formed in the center portion of the optical path of the signal light L2. The pinhole of the other pinhole member 176B has, for example, an annular shape (what is called a zone pinhole) formed radially outward from the center portion of the optical path of the signal light L2. The respective pinhole shapes of the pinhole member 176A and the pinhole member 176B may be changed to other shapes as appropriate as long as the formed pinholes have different shapes.

The optical element 17I is configured to be switchable between the first state A81 in which the pinhole member 176A is located on the optical path of the signal light L2 and the second state A82 in which the pinhole member 176B is located on the optical path of the signal light L2. The first state A81 and the second state A82 differ in the quantity of light of signal light L2 that passes through the pinhole and differ in three-dimensional point spread function (3D-PSF) through the optical system 12. The three-dimensional point spread function in the first state A81 and the three-dimensional point spread function in the second state A82 differ in profile in the Z direction.

In the image processing device 100I, the optical element 17I switches the optical system 12 between the first state A81 and the second state A82, whereby the respective structures of a plurality of planes including the first estimated sample plane Q1 in the sample 8 are estimated. As a result, an object that exists in the first estimated sample plane Q1 can be estimated accurately, and an estimated image with improved Z resolution and sectioning thickness can be obtained.

[Ninth Embodiment]

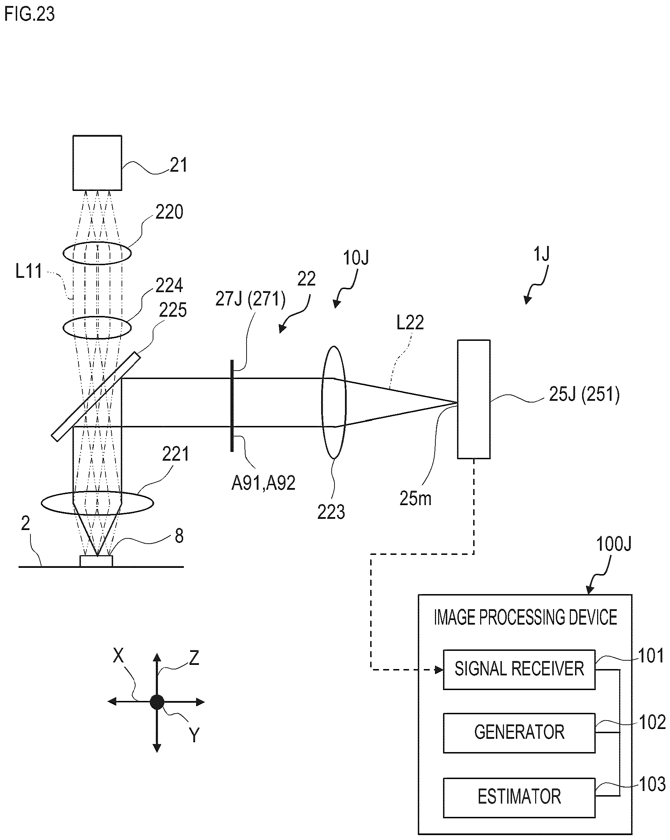

A ninth embodiment will be described. Fig. 23 is a schematic diagram illustrating an example configuration of a microscope according to the ninth embodiment. In the present embodiment, the same configuration as in the embodiment described above may be denoted by the same reference signs and a description thereof may be omitted or simplified. As illustrated in Fig. 23, a microscope 1J includes a microscope body 10J and an image processing device 100J. In the present embodiment, the microscope body 10J includes a light source 21, an illumination optical system 22 that irradiates a sample 8 with illumination light L11 from the light source 21, and a detector 25J.

Configuration of Microscope Body

The light source 21 emits illumination light L11 such as laser. The light source 21 may be a monochromatic (single wavelength) light source or a multicolor (multiple wavelengths) light source. The light source 21 can be either a laser that emits continuous wave light or a laser that emits pulsed light. The light source 21 is not necessarily a laser but may be an LED or a lamp. When a substance that emits fluorescence is used as the sample 8, a wavelength that excites a fluorescent substance contained in the sample 8 is suitably selected as the wavelength of the light source 21. When a substance that emits fluorescence is used as the sample 8, a wavelength that causes multiphoton excitation of a fluorescent substance contained in the sample 8 may be selected as the wavelength of the light source 21. The light source 21 may be provided in a replaceable manner (attachable or removable) in the microscope body 10J. The light source 21 may be attached externally to the microscope body 10J, for example, during observation with the microscope body 10J. In this case, for example, illumination light L11 may be introduced into the microscope body 10J from the light source 21 external to the microscope body 10J through an existing optical member such as an optical fiber.

The optical system 22 irradiates the sample 8 with illumination light L11 from the light source 21 and guides signal light from the sample 8 to the detector 25J. In the present embodiment, the optical system 22 includes a collimator lens 220, an objective lens 221, a lens 224, an optical path separator 225, an imaging lens 223, and the like. The collimator lens 220 converts the illumination light L11 emitted from the light source 21, such as a laser, into substantially collimated light. The lens 224 guides the substantially collimated light to the optical path separator 225 while focusing it. The optical path separator 225 is configured with a dichroic mirror or the like. The optical path separator 225 guides the illumination light L11 passing through the lens 224 to the objective lens 221.

The objective lens 221 irradiates the sample 8 held on a stage 2 with the incident illumination light L11 over a wide area. The light (signal light) L22 emitted from the sample 8 by irradiation of the illumination light L11 enters the objective lens 221. The signal light L22 passes through the objective lens 221, the optical path separator 225, and the imaging lens 223 to enter the detector 25J.

The detector 25J is disposed at a position conjugate to the illumination region of the illumination light L11 on the sample 8 through a detection optical system. An image 25m of fluorescence of the sample 8 excited by the illumination light L11 is formed on the light-receiving surface of the detector 25J. The detector 25J detects light of the image 25m formed on the light-receiving surface of the detector 25J. In the present embodiment, the detector 25J is configured such that a plurality of detector sections 251 are arranged in two dimensions. The detector section 251 includes a photoelectric converter (not illustrated) composed of a semiconductor or the like. The light-receiving surface of the detector 25J receives light of the image 25m. Each of the detector sections 251 that constitute the detector 25J outputs a signal (electrical signal) corresponding to the quantity of received light to the image processing device 100J.

In the present embodiment, an optical element 27J is provided in the optical system 22. The optical element 27J switches the optical system 22 between a first state A91 and a second state A92. In the present embodiment, an aperture 271 is provided as the optical element 27J. The aperture 271 is disposed between the optical path separator 225 and the imaging lens 223, near the conjugate position of the pupil of the objective lens 221. A relay optical system may be disposed at the pupil conjugate position. The aperture 271 is configured to be switchable between the first state A91 and the second state A92 by changing the aperture diameter. In the first state A91, the aperture diameter of the aperture 271 is larger than that in the second state A92.

When the aperture diameter of the aperture 271 differs between the first state A91 and the second state A92, the three-dimensional point spread function (3D-PSF) through the optical system 22 differs. The three-dimensional point spread function through the optical system 22 differs between the first state A91 and the second state A92.

The image processing device 100J generates images of the sample 8 on the basis of respective signals from the detector sections 251 and processes the images. The image processing device 100J is configured with a processing device such as a personal computer. The image processing device 100J includes hardware such as a CPU and a memory. The image processing device 100J functionally has a configuration as described below by the CPU, the memory, and the like in cooperation with an image processing program stored in the memory or a storage device to perform predetermined processing.

Configuration of Image Processing Device

The image processing device 100J includes a signal receiver 101, a generator 102, and an estimator 103, and each function is as described in the first embodiment and is also applicable in the present embodiment.

Relative Relationship of Two-Dimensional Point Spread Function in Plurality of Planes

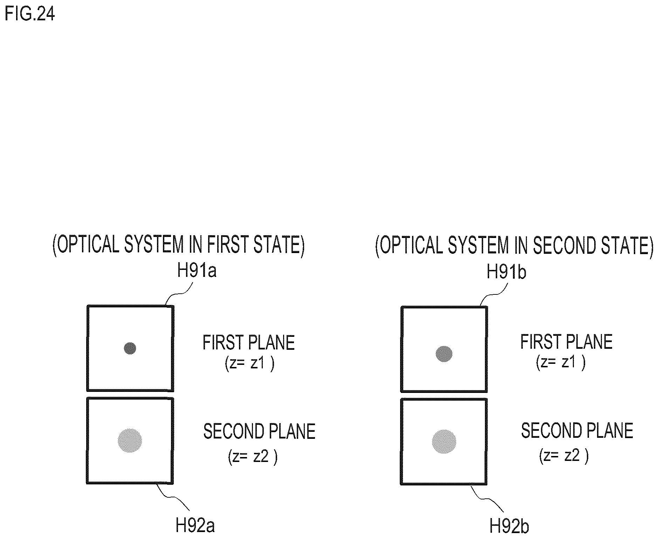

Fig. 24 is a diagram illustrating an example of a two-dimensional point spread function in a first plane P1 and a two-dimensional point spread function in a second plane P2 in the optical system in the first state and the optical system in the second state according to the ninth embodiment. In the present embodiment, the relative relationship (position, shape, intensity) between the two-dimensional point spread function in the first plane P1 and the two-dimensional point spread function in the second plane P2 differs between the first state A91 and the second state A92. In other words, as illustrated in Fig. 24, a first relative relationship between a two-dimensional point spread function H91a of the first plane P1 and a two-dimensional point spread function H92a of the second plane P2 in a first three-dimensional point spread function based on the optical system 22 in the first state A91 is different from a second relative relationship between a two-dimensional point spread function H91b of the first plane P1 and a two-dimensional point spread function of the second plane P2 in a second three-dimensional point spread function based on the optical system 22 in the second state A92 different from the first state A91 in the opening degree of the aperture 271.

In the microscope 1J and the image processing device 100J as described above, an estimated image with improved Z resolution and sectioning thickness can be obtained by varying the opening degree of the aperture 271 even in the microscope 1J including the wide field-type optical system 22.

[Tenth Embodiment]

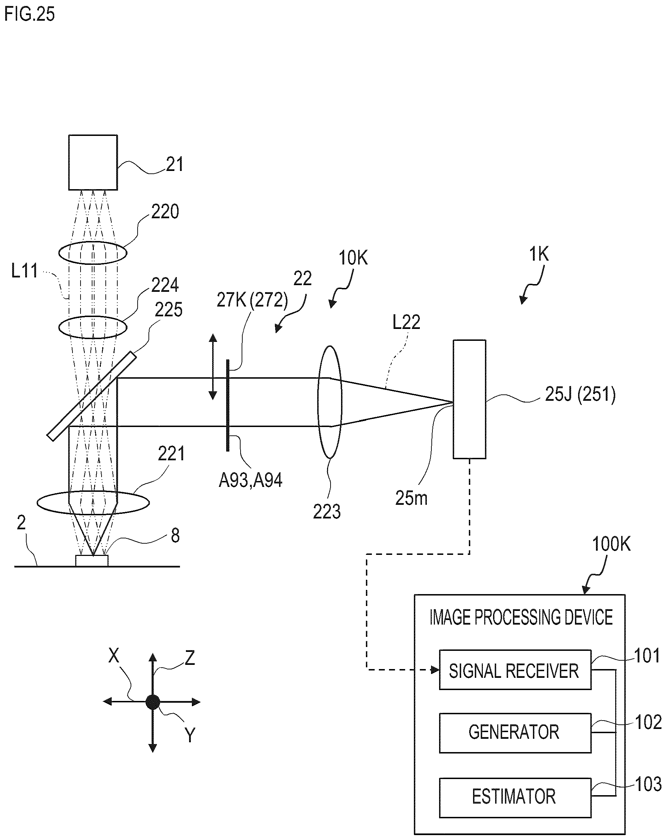

A tenth embodiment will be described. Fig. 25 is a schematic diagram illustrating an example configuration of a microscope according to the tenth embodiment. In the present embodiment, the same configuration as in the embodiment described above may be denoted by the same reference signs and a description thereof may be omitted or simplified. As illustrated in Fig. 25, a microscope 1K includes a microscope body 10K and an image processing device 100K. In the present embodiment, the microscope body 10K includes a light source 21, an illumination optical system 22 that irradiates a sample 8 with illumination light L11 from the light source 21 collectively, and a detector 25J.

In the present embodiment, an optical element 27K is provided in the optical system 22. The optical element 27K switches the optical system 22 between a first state A93 and a second state A94. In the present embodiment, an aperture 272 is provided as the optical element 27K. The aperture 272 is disposed between the optical path separator 225 and the imaging lens 223, near the conjugate position of the pupil of the objective lens 221. A relay optical system may be disposed at the pupil conjugate position. The aperture 272 is provided so as to be movable in a direction orthogonal to the optical axis direction (Z direction) of the signal light L22 with its aperture diameter kept constant. The aperture 272 switches between the first state A93 and the second state A94 by changing its position in a direction orthogonal to the optical axis direction. For example, in the first state A93, the aperture 272 is disposed at the center of the optical axis, and in the second state A94, the aperture 272 is shifted from the center of the optical axis in a direction orthogonal to the optical axis direction (Z direction).

The three-dimensional point spread function (3D-PSF) through the optical system 22 differs as the position of the aperture 272 differs between the first state A93 and the second state A94. The three-dimensional point spread function through the optical system 22 differs between the first state A93 in which the aperture 272 is located at the center of the optical axis and the second state A94 in which the aperture 272 is located so as to be shifted from the center of the optical axis of the signal light L22. Each detector section 251 detects the quantity of light of an image 25m at each of a plurality of positions in a plane orthogonal to the optical axis direction. The three-dimensional point spread function in the second state A94 is inclined with respect to the three-dimensional point spread function in the first state A93.

The generator 102 of the image processing device 100K generates a first image Ga of a plane of the sample 8 at a position corresponding to the first focal plane Fa in the Z direction, on the basis of the quantity of light detected by the detector 25J in the first state A93. The generator 102 generates a second image Gb of a plane of the sample 8 at a position corresponding to the second focal plane Fb in the Z direction, on the basis of the quantity of light detected by the detector 25J in the second state A94.

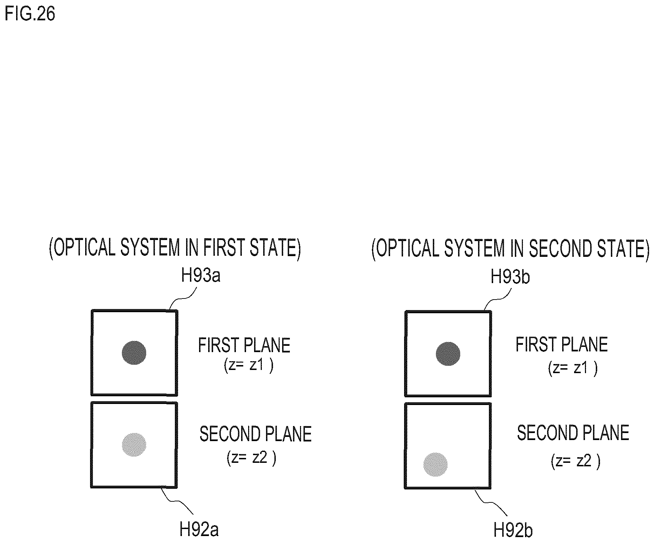

Fig. 26 is a diagram illustrating a two-dimensional point spread function in a first plane and a two-dimensional point spread function in a second plane in the optical system in the first state and the optical system in the second state according to the tenth embodiment.

The estimator 103 estimates the structures of the sample 8 in the first estimated sample plane Q1 and the second estimated sample plane Q2 on the basis of the relative relationship between the two-dimensional point spread function in the first plane P1 and the two-dimensional point spread function in the second plane P2, in the same manner as in the above ninth embodiment. In the present embodiment, the estimator 103 estimates, for example, the structures of the sample 8 in the first estimated sample plane Q1 and the second estimated sample plane Q2, on the basis of the relative position between the two-dimensional point spread function in the first plane P1 and the two-dimensional point spread function in the second plane P2.

In the microscope 1K and the image processing device 100K as described above, an estimated image with improved Z resolution and sectioning thickness can be obtained by varying the position of the aperture 272 relative to the optical axis even in the microscope 1K including the wide field-type optical system 22.

In the above tenth embodiment, the aperture 272 is provided as the optical element 27K. However, instead of this, a prism, a phase plate, or a cylindrical lens may be moved relative to the optical axis of the signal light L22 or advanced or retracted relative to the optical path of the signal light L22.

[Eleventh Embodiment]

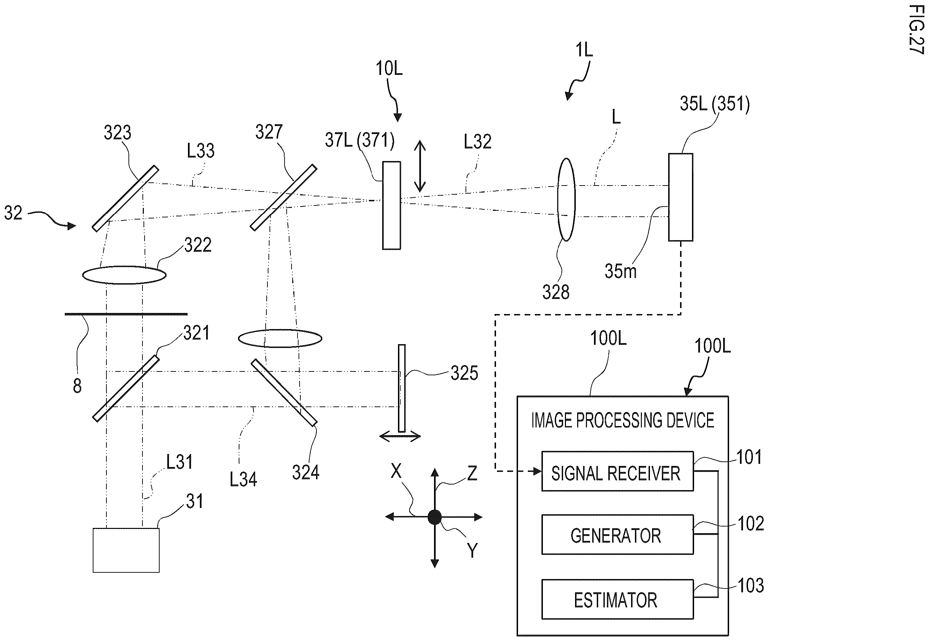

An eleventh embodiment will be described. Fig. 27 is a schematic diagram illustrating an example configuration of a microscope according to the eleventh embodiment. In the present embodiment, the same configuration as in the embodiment described above may be denoted by the same reference signs and a description thereof may be omitted or simplified. As illustrated in Fig. 27, a microscope 1L includes a microscope body 10L and an image processing device 100L. In the present embodiment, the microscope body 10L is a holographic microscope and includes a light source 31, an optical system 32, and a detector 35L.

The light source 31 emits illumination light L31 such as laser. The optical system 32 irradiates a sample 8 with illumination light L31 from the light source 31 and guides transmitted light (object light) light L33 from the sample 8 to the detector 35L. In the present embodiment, the optical system 32 includes a beam splitter 321, a lens 322, a deflector 323, a half mirror 324, a phase shifting mirror 325, a beam combiner 327, a lens 328, and the like.

In the optical system 32, the sample 8 is irradiated with part of the illumination light L31 from the light source 31 through the beam splitter 321. The light (transmitted light) L33 transmitted through the sample 8 enters the beam combiner 327 through the deflector 323. The remaining part of the illumination light L31 passes through the beam splitter 321 and enters the beam combiner 327 as reference light L34 through the half mirror 324 and the phase shifting mirror 325. In the beam combiner 327, the transmitted light L33 and the reference light L34 cause interference, and the interference light enters the detector 35L as signal light L32.

An interference fringe pattern 35m is formed by the signal light L32 on the light-receiving surface of the detector 35L. The detector 35L detects light of the interference fringe pattern 35m formed on the light-receiving surface of the detector 35L. In the present embodiment, the detector 35L is configured such that a plurality of detector sections 351 are arranged in two dimensions. The detector section 351 includes a photoelectric converter (not illustrated) composed of a semiconductor or the like. The light-receiving surface of the detector 35L receives light of the interference fringe pattern 35m. Each of the detector sections 351 that constitute the detector 35L outputs a signal (electrical signal) corresponding to the intensity of received light to the image processing device 100L. A complex amplitude distribution of the transmitted light L33 can be reconstructed by shifting the phase shifting mirror in the optical axis direction to acquire a plurality of images and analyzing them using a phase-shifting method or the like. This distribution reflects information on the complex refractive index of the sample 8 and therefore can be considered as an image of the sample 8.

In the present embodiment, an optical element 37L is provided in the optical system 32. The optical element 37L switches the optical system 32 between a first state A101 and a second state A102. In the present embodiment, a phase plate 371 is provided as the optical element 37L. The phase plate 371 is provided such that it can be advanced or retracted relative to the optical path of the signal light L32. The optical element 37L is configured to be switchable between the first state A101 in which the optical element 37L is located outside the optical path of the signal light L32 and the second state A102 in which the optical element 37L is advanced into the optical path of the signal light L32. In the second state A102 in which the phase plate 371 is advanced into the optical path of the signal light L32, the phase of the signal light L32 changes. As the phase plate 371, for example, the one that generates a spiral three-dimensional amplitude spread function for the signal light L32 can be used.

The amplitude spread function based on the optical system 32 differs between the first state A101 in which the phase plate 371 is located outside the optical path of the signal light L32 and the second state A102 in which the phase plate 371 is located on the optical path of the signal light L32.

The image processing device 100L generates images of the sample 8 on the basis of respective signals from the detector sections 351 and processes the images. The image processing device 100L is configured with a processing device such as a personal computer. The image processing device 100L includes hardware such as a CPU and a memory. The image processing device 100L functionally has a configuration as described below by the CPU, the memory, and the like in cooperation with an image processing program stored in the memory or a storage device to perform predetermined processing.

Configuration of Image Processing Device

The image processing device 100L functionally includes a signal receiver 101, a generator 102, and an estimator 103. The signal receiver 101 receives signals output from the detector sections 351 that correspond to the intensity of light of the interference fringe pattern 35m. The generator 102 generates an image of the focal plane F in the optical system 32 on the basis of the signals from the detector sections 351.

The generator 102 generates a plurality of images G of the sample 8 on the basis of the intensity of light detected by each detector section 351 in each of the first state A101 and the second state A102. The generator 102 generates a first image Ga of the sample 8 at a position corresponding to the focal plane F in the Z direction, on the basis of the intensity of light detected by the detector section 351 in the first state A101. The generator 102 generates a second image Gb of the sample 8 at a position corresponding to the second focal plane Fb in the Z direction, on the basis of the intensity of light detected by the detector section 351 in the second state A102.

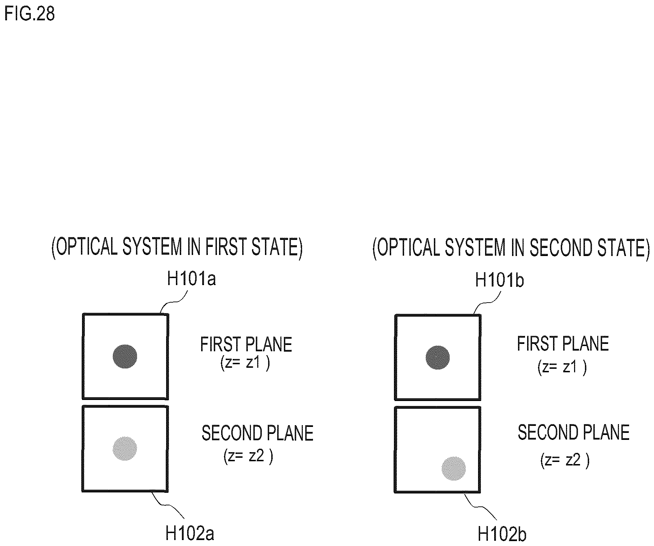

Fig. 28 is a diagram illustrating a two-dimensional amplitude spread function in the first plane P1 and a two-dimensional amplitude spread function in the second plane P2 in the optical system in the first state and the optical system in the second state according to the eleventh embodiment. The estimator 103 calculates or stores in advance the two-dimensional amplitude spread functions of the first plane P1 and the second plane P2 in a three-dimensional amplitude spread function of the optical system in each of the states, as two-dimensional images. As illustrated in Fig. 28, in a three-dimensional amplitude spread function $h'(x,y,z)$ of the optical system in each of the aforementioned states, the amplitude spread function $h'(x,y,z1)$ when the z coordinate is the z coordinate of the first plane P1 ($z = z1$) is defined as a two-dimensional amplitude spread function H101 in the first plane P1. Further, the amplitude spread function $h'(x,y,z2)$ when the z coordinate is the z coordinate of the second plane P2 ($z = z2$) is defined as a two-dimensional amplitude spread function image H102 in the second plane P2.

The estimator 103 estimates the structures of the sample 8 in the first estimated sample plane Q1 and the second estimated sample plane Q2, on the basis of the relative relationship between the two-dimensional amplitude spread function in the first plane P1 and the two-dimensional amplitude spread function in the second plane P2. In the present embodiment, the estimator 103 estimates, for example, the structures of the sample 8 in the first estimated sample plane Q1 and the second estimated sample plane Q2, on the basis of the relative position between the two-dimensional amplitude spread function in the first plane P1 and the two-dimensional amplitude spread function in the second plane P2.

In the microscope 1L and the image processing device 100L as described above, an estimated image with improved Z resolution and sectioning thickness can be obtained by using the phase plate 371 even in the holographic microscope 1L.

[Twelfth Embodiment]

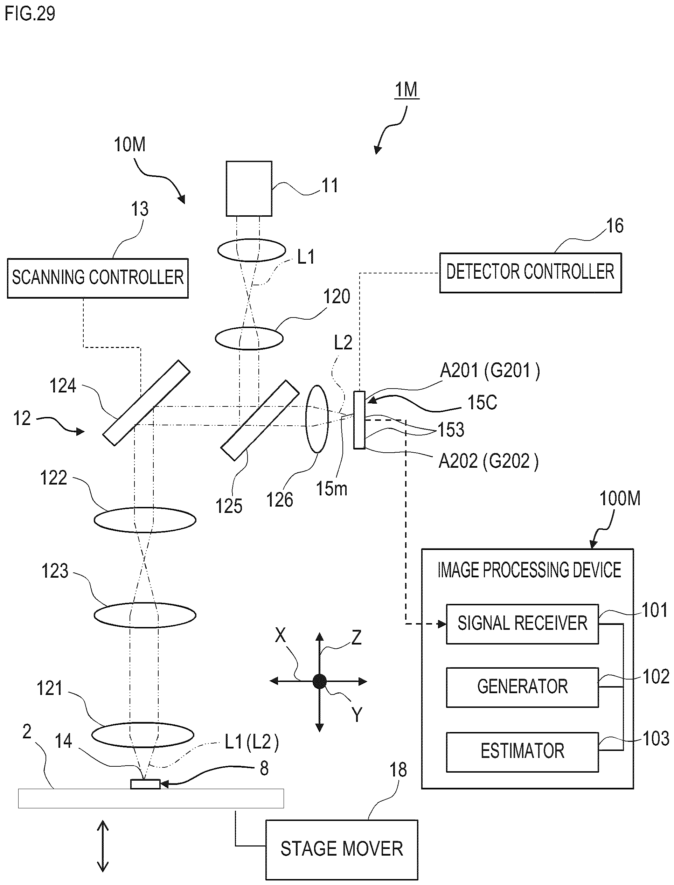

A twelfth embodiment will be described. Fig. 29 is a schematic diagram illustrating an example configuration of a scanning microscope according to the twelfth embodiment. In the present embodiment, the same configuration as in the embodiment described above may be denoted by the same reference signs and a description thereof may be omitted or simplified. As illustrated in Fig. 29, a microscope 1M includes a microscope body 10M and an image processing device 100M. The microscope body 10M includes a light source 11, an optical system 12, a scanning controller 13, a stage mover 18, and a detector 15C. The stage mover 18 raises and lowers a stage 2 that holds a sample 8. The stage mover 18 moves the stage 2 that holds the sample 8 in the optical axis direction (Z direction). In this case, moving the sample 8 in the optical axis direction by the stage mover 18 changes the position of the focal plane F of the optical system 12 relative to the sample 8 but does not change the position of the focal plane F in the optical system 12 per se.

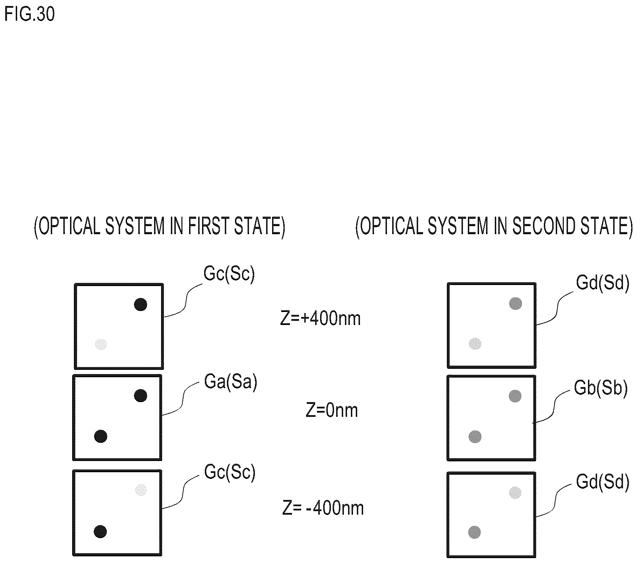

Fig. 30 is a diagram illustrating an example of a plurality of images generated by the generator in the twelfth embodiment. In the microscope 1M in the present embodiment, the focal plane of the optical system 12 is matched with a plurality of sample planes at different positions in the optical axis direction by the stage mover 18, and at each position, the light of an image 15m is detected by the detector 15C. In the microscope 1M, a first image Ga is acquired in a state in which the first focal plane Fa in the optical system in a first state A201 matches a first sample plane Sa (for example, Z = 0 nm) of the sample 8. Further, in the microscope 1M, a second image Gb is acquired in a state in which a second focal plane Fb in the optical system in a second state A202 matches a second sample plane Sb (for example, Z = 0 nm) of the sample 8. The first focal plane Fa and the second focal plane Fb substantially match in position in the optical axis direction (Z direction).

Further, in the microscope 1M, the sample 8 supported on the stage 2 is moved in the optical axis direction by the stage mover 18, and a third image Gc is acquired in a state in which the first focal plane Fa in the optical system 12 in the first state A201 matches a third sample plane Sc (for example, Z = +400 nm) of the sample 8. Further, in the microscope 1M, a fourth image Gd is acquired in a state in which the second focal plane Fb in the optical system 12 in the second state A202 matches a fourth sample plane Sd (for example, Z = +400 nm) of the sample 8. The third sample plane Sc and the fourth sample plane Sd respectively differ from the first sample plane Sa and the second sample plane Sb in the position in the optical axis direction (Z direction). A third estimated sample plane is located near the third sample plane and the fourth sample plane. A plane that matches the third estimated sample plane when the first plane matches the first estimated sample plane is defined as a third plane.

The estimator 103 calculates or stores in advance the two-dimensional point spread functions of the first plane P1, the second plane P2, and the third plane P3 (the second plane P2 is located between the first plane P1 and the third plane P3) in the three-dimensional point spread functions through the optical system 12 in all states to acquire a plurality of images G. For example, the structure of the sample 8 that does not match the focal plane (second estimated sample plane) can be reconstructed by setting the first estimated sample plane to Z = 0 nm, the second estimated sample plane to Z = 200 nm, and the third estimated sample plane to Z = 400 nm.

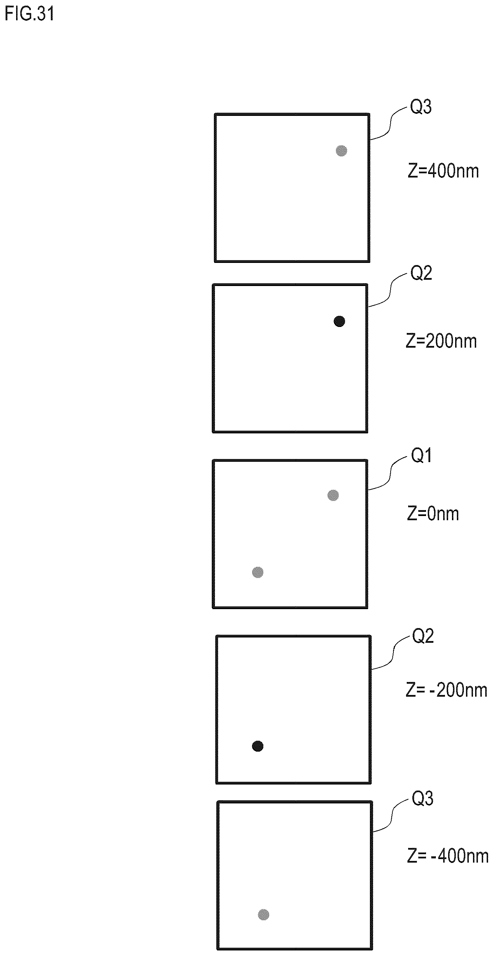

Fig. 31 is a diagram illustrating an example of an estimated image based on a structure estimated by the estimator in the twelfth embodiment. The estimator 103 estimates the structures of the sample 8 in the first estimated sample plane Q1, the second estimated sample plane Q2, and the third estimated sample plane Q3 by using a plurality of images Ga, Gb, Gc, and Gd, on the basis of the relative relationship between the two-dimensional point spread function in the first plane P1 and the two-dimensional point spread function in the second plane P2, or the relative relationship between the two-dimensional point spread function in the first plane P1 and the two-dimensional point spread function in the third plane P3.

In this case, it is desirable that there is a predetermined difference between the relative relationship between the two-dimensional point spread function of the first plane P1 and the two-dimensional point spread function of the second plane P2 in the optical system in the first state A201 and the relative relationship (intensity, position, shape) between the two-dimensional point spread function of the first plane P1 and the two-dimensional point spread function of the second plane P2 in the optical system in the second state A202. Alternatively, it is desirable that there is a predetermined difference between the relative relationship between the two-dimensional point spread function of the first plane P1 and the two-dimensional point spread function of the third plane P3 in the optical system in the first state A201 and the relative relationship (intensity, position, shape) between the two-dimensional point spread function of the first plane P1 and the two-dimensional point spread function of the third plane P3 in the optical system in the second state A202.

Various known algorithms can be employed for estimation of an object in the estimator 103, in the same manner as in the first embodiment. Here, for example, it is assumed that an algorithm by a gradient method is used. A three-dimensional captured image Im, taken by the detector section 153 disposed at the m-th position, is represented by the following Expression (14).

$$I_m = A_m s \quad \cdots \quad (14)$$

Here, s is a P-dimensional vector representing a three-dimensional fluorescent molecule distribution, and $A_m$ is an N×P matrix represented by the following Expression (15) (N = Nx × Ny × Nz) .

$$[A_m s](x_n, y_n, z_n) = \sum_{p=1}^{p} s(x_p, y_p, z_p) h_m(x_n - x_p, y_n - y_p, z_n - z_p)$$
$$\cdots \quad (15)$$

Here, $(x_n, y_n, z_n)$ is the coordinates of the illumination region 14 of illumination light L1, and $(x_p, y_p, z_p)$ is the coordinates of a sample space. $h_m$ represents the three-dimensional point spread function of the optical system for the detector section 153 at the m-th position.

The estimator 103 estimates a fluorescent molecule distribution in the sample 8 by minimizing an error function F(s) represented by the following Expression (16).

$$F(s) = \sum_{m=1}^{M} \sum_{n=1}^{N} \left\| (I_m^{mes})_n - (A_m s)_n \right\|^2 \quad \cdots \quad (16)$$

Here, $I^{mes}$ is an image (N-dimensional vector) actually acquired by the detector 15A disposed at the m-th position.

In the microscope 1M and the image processing device 100M as described above, observation is performed by moving the sample 8 in the optical axis direction of the optical system 12 to match the focal plane with a plurality of sample planes S, whereby the structures of the sample 8 in the estimated sample planes Q1 and Q3 can be estimated. Furthermore, the structure in a plane between the estimated sample planes Q1 and Q3 can also be estimated. Accordingly, the number of images captured during three-dimensional imaging can be reduced, leading to a shorter imaging time.

Although the embodiments have been described above, the technical scope of the invention is not limited to the modes described in the above embodiments and the like. One or more of the requirements described in the above embodiments and the like may be omitted. The requirements described in the above embodiments and the like can be combined as appropriate. To the extent permitted by law, the disclosures of all the references cited herein are incorporated herein by reference and made a part of the text.

Description of Reference Signs

1A to 1M: microscope
8: sample
12, 22, 32: optical system
15A to 15D, 25J, 35L: detector
15m, 25m, 35: image
17D to 17I, 27J, 27K, 37L: optical element
100A to 100M: image processing device
102: generator
103: estimator
121: objective lens
151, 152, 154: point detector
153, 251, 351: detector section
221: objective lens
271, 272: aperture
A1, A21, A31, A41, A61, A71, A81, A91, A93, A101, A201: first state
A2, A22, A32, A42, A62, A72, A82, A92, A94, A102, A202: second state
F: focal plane
Fa: first focal plane
Fb: second focal plane
G: image
G1, G11, G21, G201: first position
G2, G12, G22, G202: second position
Ga, Gb, Gc, Gd: image
Ie: estimated image
L1, L11, L31: illumination light
L2, L22, L32: signal light
L33: transmitted light
L34: reference light
P1: first plane
P2: second plane
Q1, Q2, Q3: estimated sample plane
S: sample plane
Sa: first sample plane
Sb: second sample plane
Sc: third sample plane
Sd: fourth sample plane

**Claims**

**1.** A microscope comprising:

an optical system to irradiate a sample with illumination light and guide signal light from the sample to a detector; and

an image processing device to generate an image of the sample on the basis of a signal from the detector and process the image,
wherein a first three-dimensional point spread function based on the optical system in a first state is different from a second three-dimensional point spread function based on the optical system in a second state different from the first state,
wherein the image processing device includes

a generator that generates an image group including a first image of a first focal plane based on the signal acquired through the optical system in the first state and a second image of a second focal plane based on the signal acquired through the optical system in the second state, the second focal plane substantially matching the first focal plane in an optical axis direction of the optical system, the image group being based on the signal acquired without changing a relative positional relationship in the optical axis direction between the sample and an irradiation position of the illumination light, and
an estimator that estimates respective structures of a plurality of planes including a first estimated sample plane in the sample, along the optical axis direction, on the basis of the image group, and the first three-dimensional point spread function and the second three-dimensional point spread function, and outputs an estimated image based on the estimated structures,

wherein the estimator incorporates at least one of the following:

i) outputting, as the estimated image, an image obtained by weighting and integrating the respective estimated structures of the planes; or
ii) outputting, as the estimated image, an image obtained by weighting the first three-dimensional point spread function and the second three-dimensional point spread function differently in the optical axis direction, then estimating the structures, and integrating the estimated structures in a state of weighting of 1.

2. The microscope according to claim 1,

wherein the first image is acquired by matching the first focal plane with a first sample plane of the sample, and
wherein the second image is acquired by matching the second focal plane with a second sample plane of the sample.

3. The microscope according to claim 1 or 2,

wherein a first relative relationship between a two-dimensional point spread function of a first plane and a two-dimensional point spread function of a second plane different from the first plane in the optical axis direction in the first three-dimensional point spread function is different from a second relative relationship between a two-dimensional point spread function of the first plane and a two-dimensional point spread function of the second plane in the second three-dimensional point spread function, and
wherein the first plane is determined so as to substantially match at least one of the first focal plane or the second focal plane.

4. The microscope according to claim 3, wherein the first estimated sample plane matches the first plane.

5. The microscope according to claim 3 or 4, wherein the estimated image has an image of a second estimated sample plane that matches the second plane.

6. The microscope according to any one of claims 1 to 5,

wherein the optical system has an objective lens, and
wherein the first focal plane and the second focal plane are focal planes of the objective lens.

7. The microscope according to any one of claims 1 to 5,
wherein the first focal plane and the second focal plane are defined by any one of:

a plane in which a maximum of the three-dimensional point spread function of the optical system in a corresponding one of the states exists in the optical axis direction;

a plane in which a maximum of an integrated value of the three-dimensional point spread function of the optical system in a corresponding one of the states in a plane intersecting the optical axis direction exists in the optical axis direction; and

a plane in which a center position of Gaussian exists in the optical axis direction when Gaussian fitting is performed to find an approximate function of the three-dimensional point spread function of the optical system in a corresponding one of the states.

8. The microscope according to any one of claims 3 to 5, wherein the first relative relationship and the second relative relationship are any one of a relationship in intensity between the two-dimensional point spread functions, a relationship in position between the two-dimensional point spread functions, and a relationship in shape between the two-dimensional point spread functions.

9. The microscope according to any one of claims 1 to 8,

wherein the detector is a point detector,
wherein, in the first state, the first image is acquired by the point detector disposed at a first position, and
wherein, in the second state, the second image is acquired by the point detector disposed at a second position different from the first position.

10. The microscope according to claim 9, wherein the point detector moves between the first position and the second position.

11. The microscope according to any one of claims 1 to 8,

wherein the detector is formed such that a plurality of detector sections are arranged in two dimensions,
wherein, in the first state, the first image is acquired by the detector section disposed at a first position, and
wherein, in the second state, the second image is acquired by the detector section disposed at a second position different from the first position.

12. The microscope according to any one of claims 1 to 8, wherein the optical system in the first state and the optical system in the second state are switched by using an optical element included in the optical system.

13. The microscope according to claim 12,

wherein the optical element is advanceable and retractable relative to the illumination light or the signal light, and
wherein the optical element is advanced to shift the illumination light or the signal light in a direction intersecting the optical axis direction to switch between the optical system in the first state and the optical system in the second state.

14. The microscope according to claim 12,

wherein the optical element is a pinhole through which the signal light passes, the pinhole having a changeable size or shape, and
wherein the size or the shape of the pinhole is changed to switch between the optical system in the first state and the optical system in the second state.

15. The microscope according to claim 12,

wherein the optical element is an aperture through which the illumination light or the signal light passes, the aperture having a changeable aperture diameter or position, and
wherein the aperture diameter or the position of the aperture is changed to switch between the optical system in the first state and the optical system in the second state.

16. The microscope according to any one of claims 1 to 15,

wherein the generator further generates the image group including a third image and a fourth image based on the signal acquired by changing a relative positional relationship in the optical axis direction between the sample and an irradiation position of the illumination light,

wherein the third image is acquired by matching the first focal plane in the optical system in the first state with a third sample plane of the sample,

wherein the fourth image is acquired by matching the second focal plane in the optical system in the second state with a fourth sample plane of the sample, and

wherein the third sample plane and the fourth sample plane respectively differ from a first sample plane and a second sample plane of the sample in the optical axis direction.

17. The microscope according to claim 16, wherein the estimated image includes a two-dimensional image corresponding to a plane that exists between the first estimated sample plane and a third estimated sample plane that substantially matches the third sample plane, along the optical axis direction.

18. The microscope according to claim 7, wherein the estimated image includes at least two-dimensional images respectively corresponding to the second estimated sample plane that matches the second plane and a third estimated sample plane that substantially matches a third sample plane of the sample.

19. The microscope according to any one of claims 1 to 18, wherein a resolution in the optical axis direction of the estimated image is higher than a resolution in the optical axis direction of the first image and the second image.

20. A microscope comprising:

an optical system to irradiate a sample with illumination light and guide signal light from the sample to a detector; and

an image processing device to generate an image of the sample on the basis of a signal from the detector and process the image,

wherein a first three-dimensional amplitude spread function based on the optical system in a first state is different from a second three-dimensional amplitude spread function based on the optical system in a second state different from the first state,

wherein the image processing device includes

a generator that generates an image group including a first image of a first focal plane based on the signal acquired through the optical system in the first state and a second image of a second focal plane based on the signal acquired through the optical system in the second state, the second focal plane substantially matching the first focal plane in an optical axis direction of the optical system, the image group being based on the signal acquired without changing a relative positional relationship in the optical axis direction between the sample and an irradiation position of the illumination light, and

an estimator that estimates respective structures of a plurality of planes including a first estimated sample plane in the sample, along the optical axis direction, on the basis of the image group, and the first three-dimensional amplitude spread function and the second three-dimensional amplitude spread function, and outputs an estimated image based on the estimated structures,

wherein the estimator incorporates at least one of the following:

i) outputting, as the estimated image, an image obtained by weighting and integrating the respective estimated structures of the planes; or

ii) outputting, as the estimated image, an image obtained by weighting the first three-dimensional amplitude spread function and the second three-dimensional amplitude spread function differently in the optical axis direction, then estimating the structures, and integrating the estimated structures in a state of weighting of 1.

21. An image processing device that generates an image of a sample on the basis of a signal of detection in a detector of signal light from the sample when the sample is irradiated with illumination light by an optical system, and processes the image, the image processing device comprising a generator and an estimator,

wherein, when a first three-dimensional point spread function based on the optical system in a first state is different from a second three-dimensional point spread function based on the optical system in a second state different from the first state:

the generator generates an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and

the estimator estimates respective structures of a plurality of planes including a first estimated sample plane in the sample, along the optical axis direction, on the basis of the image group, and the first three-dimensional point spread function and the second three-dimensional point spread function, and outputs an estimated image based on the estimated structures,

wherein the estimator includes at least one of the following:

i) outputting, as the estimated image, an image obtained by weighting and integrating the respective estimated structures of the planes; or

ii) outputting, as the estimated image, an image obtained by weighting the first three-dimensional point spread function and the second three-dimensional point spread function differently in the optical axis direction, then estimating the structures, and integrating the estimated structures in a state of weighting of 1.

22. An image processing method to generate an image of a sample on the basis of a signal of detection in a detector of signal light from the sample when the sample is irradiated with illumination light by an optical system, and process the image, the image processing method comprising, when a first three-dimensional point spread function based on the optical system in a first state is different from a second three-dimensional point spread function based on the optical system in a second state different from the first state:

generating an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and

estimating respective structures of a plurality of planes including a first estimated sample plane in the sample, along the optical axis direction, on the basis of the image group, and the first three-dimensional point spread function and the second three-dimensional point spread function, and outputting an estimated image based on the estimated structures,

wherein the outputting the estimated image includes at least one of the following:

i) outputting, as the estimated image, an image obtained by weighting and integrating the respective estimated structures of the planes; or

ii) outputting, as the estimated image, an image obtained by weighting the first three-dimensional point spread function and the second three-dimensional point spread function differently in the optical axis direction, then estimating the structures, and integrating the estimated structures in a state of weighting of 1.

23. An image processing program to generate an image of a sample on the basis of a signal of detection in a detector of signal light from the sample when the sample is irradiated with illumination light by an optical system, and process the image, the image processing program causing a computer to perform processing comprising, when a first three-dimensional point spread function based on the optical system in a first state is different from a second three-dimensional point spread function based on the optical system in a second state different from the first state:

generating an image group including a first image of a first focal plane based on the signal acquired in the optical system in the first state and a second image of a second focal plane based on the signal acquired in the optical system in the second state, the image group being based on the signal acquired without changing a relative positional relationship in an optical axis direction of the optical system between the sample and an irradiation position of the illumination light; and

estimating respective structures of a plurality of planes including a first estimated sample plane in the sample, along the optical axis direction, on the basis of the image group, and the first three-dimensional point spread function and the second three-dimensional point spread function, and outputting an estimated image based on the estimated structures,

wherein the outputting the estimated image includes at least one of the following:

i) outputting, as the estimated image, an image obtained by weighting and integrating the respective estimated structures of the planes; or

ii) outputting, as the estimated image, an image obtained by weighting the first three-dimensional point spread function and the second three-dimensional point spread function differently in the optical axis direction, then estimating the structures, and integrating the estimated structures in a state of weighting of 1.

FIG.1

FIG.2

INTENSITY

OPTICAL SYSTEM IN SECOND STATE

OPTICAL SYSTEM IN FIRST STATE

Z

FIG.3

EP 4 481 464 A1

(OPTICAL SYSTEM IN FIRST STATE)     (OPTICAL SYSTEM IN SECOND STATE)     (SAMPLE)

A1 (P1)     A2 (P2)

15A (151)     15A (151)

126     126

121     121

SECOND PLANE P2a (P)
SECOND ESTIMATED SAMPLE PLANE Q2a (Q2)

H2a (H)

FIRST FOCAL PLANE Fa(F)     Ga(G)     SECOND FOCAL PLANE Fb(F)
FIRST SAMPLE PLANE Sa(S)     SECOND SAMPLE PLANE Sb(S)     Gb(G)

FIRST PLANE P1a (P)
FIRST ESTIMATED SAMPLE PLANE Q1a (Q1)

H1a (H)

Zmax

X   Z
Y

Zmin

FIG.4

(OPTICAL SYSTEM IN FIRST STATE)

(OPTICAL SYSTEM IN SECOND STATE)

Ga(G)

Gb(G)

FIG.5

(OPTICAL SYSTEM IN FIRST STATE)　　(OPTICAL SYSTEM IN SECOND STATE)

H1a

FIRST PLANE
$(z = z1)$

SECOND PLANE
$(z = z2)$

H2a

H1b

FIRST PLANE
$(z = z1)$

SECOND PLANE
$(z = z2)$

H2b

FIG.6

```
                    ┌─────────────┐
                    │    START    │
                    └─────────────┘
                           │
                           ▼
┌──────────────────────────────────────────────────┐
│      IRRADIATE SAMPLE WITH ILLUMINATION LIGHT      │ ⟋ S11
└──────────────────────────────────────────────────┘
                           │
                           ▼
┌──────────────────────────────────────────────────┐
│      DETECT QUANTITY OF LIGHT OF IMAGE OF SAMPLE   │ ⟋ S12
└──────────────────────────────────────────────────┘
                           │
                           ▼
┌──────────────────────────────────────────────────┐
│      GENERATE IMAGE OF SAMPLE AND PROCESS IMAGE    │ ⟋ S13
└──────────────────────────────────────────────────┘
                           │
                           ▼
┌──────────────────────────────────────────────────┐
│  ESTIMATE RESPECTIVE STRUCTURES OF PLURALITY       │
│  OF PLANES IN SAMPLE AND OUTPUT ESTIMATED IMAGE    │ ⟋ S14
│  BASED ON ESTIMATED STRUCTURES                     │
└──────────────────────────────────────────────────┘
                           │
                           ▼
                    ┌─────────────┐
                    │     END     │
                    └─────────────┘
```

FIG.7

FIG.8

FIG.9

FIG.10

FIG.11

FIG.12

(SAMPLE)

EP 4 481 464 A1

FIG.13

FIG.14

THREE-DIMENSIONAL POINT
SPREAD FUNCTION
IN FIRST STATE

Z

X

THREE-DIMENSIONAL POINT
SPREAD FUNCTION
IN SECOND STATE

FIG.15

(OPTICAL SYSTEM IN FIRST STATE)

H31a

FIRST PLANE
$(z = z1)$

SECOND PLANE
$(z = z2)$

H32a

(OPTICAL SYSTEM IN SECOND STATE)

H31b

FIRST PLANE
$(z = z1)$

SECOND PLANE
$(z = z2)$

H32b

FIG.16

FIG.17

(OPTICAL SYSTEM IN FIRST STATE)

H41a

FIRST PLANE
($z = z1$)

SECOND PLANE
($z = z2$)

H42a

(OPTICAL SYSTEM IN SECOND STATE)

H41b

FIRST PLANE
($z = z1$)

SECOND PLANE
($z = z2$)

H42b

FIG.18

FIG.19

(OPTICAL SYSTEM IN FIRST STATE)

H61a

FIRST PLANE
(z= z1 )

SECOND PLANE
(z= z2 )

H62a

(OPTICAL SYSTEM IN SECOND STATE)

H61b

FIRST PLANE
(z= z1 )

SECOND PLANE
(z= z2 )

H62b

FIG.20

FIG.21

(OPTICAL SYSTEM IN FIRST STATE)

H71a

FIRST PLANE
(z= z1 )

SECOND PLANE
(z= z2 )

H72a

(OPTICAL SYSTEM IN SECOND STATE)

H71b

FIRST PLANE
(z= z1 )

SECOND PLANE
(z= z2 )

H72b

FIG.22

SCANNING CONTROLLER

DETECTOR CONTROLLER

IMAGE PROCESSING DEVICE

SIGNAL RECEIVER

GENERATOR

ESTIMATOR

FIG.23

FIG.24

(OPTICAL SYSTEM IN FIRST STATE)

H91a

FIRST PLANE
$(z= z1 )$

SECOND PLANE
$(z= z2 )$

H92a

(OPTICAL SYSTEM IN SECOND STATE)

H91b

FIRST PLANE
$(z= z1 )$

SECOND PLANE
$(z= z2 )$

H92b

FIG.25

FIG.26

(OPTICAL SYSTEM IN FIRST STATE)

H93a

FIRST PLANE
(z= z1 )

SECOND PLANE
(z= z2 )

H92a

(OPTICAL SYSTEM IN SECOND STATE)

H93b

FIRST PLANE
(z= z1 )

SECOND PLANE
(z= z2 )

H92b

FIG.27

FIG.28

(OPTICAL SYSTEM IN FIRST STATE)

H101a

FIRST PLANE
(z= z1 )

SECOND PLANE
(z= z2 )

H102a

(OPTICAL SYSTEM IN SECOND STATE)

H101b

FIRST PLANE
(z= z1 )

SECOND PLANE
(z= z2 )

H102b

EP 4 481 464 A1

FIG.29

1M

10M

11

13

SCANNING CONTROLLER

16

DETECTOR CONTROLLER

L1

120

L2

A201 (G201)

15C

124

153

12

A202 (G202)

122

125   126   15m

100M

123

IMAGE PROCESSING DEVICE

SIGNAL RECEIVER

101

X   Z

GENERATOR

102

121

Y

2   14

L1(L2)

8

ESTIMATOR

103

18

STAGE MOVER

59

FIG.30

(OPTICAL SYSTEM IN FIRST STATE)    (OPTICAL SYSTEM IN SECOND STATE)

Gc(Sc)    Z=+400nm    Gd(Sd)

Ga(Sa)    Z=0nm    Gb(Sb)

Gc(Sc)    Z=-400nm    Gd(Sd)

FIG.31

Q3
Z=400nm

Q2
Z=200nm

Q1
Z=0nm

Q2
Z= -200nm

Q3
Z= -400nm

## INTERNATIONAL SEARCH REPORT

International application No.

**PCT/JP2022/006016**

### A. CLASSIFICATION OF SUBJECT MATTER

**G02B 21/36**(2006.01)i

FI: G02B21/36

According to International Patent Classification (IPC) or to both national classification and IPC

### B. FIELDS SEARCHED

Minimum documentation searched (classification system followed by classification symbols)

G02B21/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-154314 A (ZEISS CARL MICROSCOPY GMBH) 24 September 2020 (2020-09-24) paragraphs [0038]-[0062], fig. 1, 2 | 1-9, 11, 16-23 |
| A | entire text, all drawings | 10, 12-15 |
| Y | JP 2015-108837 A (CANON KK) 11 June 2015 (2015-06-11) paragraphs [0017]-[0109] | 1-9, 11, 16-23 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/006016**

| Patent document cited in search report | | | Publication date (day/month/year) | Patent family member(s) | | | Publication date (day/month/year) |
|---|---|---|---|---|---|---|---|
| JP | 2020-154314 | A | 24 September 2020 | US | 2020/0301121 | A1 | |
| | | | | paragraphs [0034]-[0049], fig. 1, 2 | | | |
| | | | | EP | 3712670 | A1 | |
| | | | | DE | 102019107267 | A1 | |
| JP | 2015-108837 | A | 11 June 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **C. ROIDER et al.** Deconvolution approach for 3D scanning microscopy with helical phase engineering. *Biomedical Optics Express*, 2016, vol. 24 (14), 15456